# EUROPEAN PATENT SPECIFICATION

(11) **EP 3 844 330 B1**
(45) Date of publication and mention of the grant of the patent: **02.04.2025**
(21) Application number: 19854858.8
(22) Date of filing: 20.08.2019
(51) Int. Cl.: D02G 3/04, D01F 8/02, D01D 5/253, D01D 5/22, D04H 1/425, D04H 1/541

(54) **CELLULOSE ACETATE FIBER BLENDS FOR THERMAL INSULATION BATTING**
CELLULOSE-ACETAT-FASERMISCHUNGEN FÜR WÄRMEISOLIERENDE FASERMATTE
MÉLANGES DE FIBRES D'ACÉTATE DE CELLULOSE POUR OUATE D'ISOLATION THERMIQUE

(30) Priority: 29.08.2018 US 201862724221 P; 14.08.2019 US 201916540158
(43) Date of publication of application: 07.07.2021
(73) Proprietor: Eastman Chemical Company, Kingsport, TN 37660 (US)
(72) Inventor: CHAMBERS, Loren William, Church Hills, TN 37642 (US); EVERETT, Charles Stuart, Kingsport, TN 37664 (US); STEACH, Jeremy Kenneth, Kingsport, TN 37664 (US); EDWARDS, Brian Tyndall, Jonesborough, TN 37659 (US)
(74) Representative: Kraus & Lederer PartGmbB
(86) International application number: PCT/US2019/047195
(87) International publication number: WO 2020/046634

(56) References cited:
- WO-A1-2015/188032
- WO-A1-2018/160584
- US-A- 5 677 058
- US-A- 5 677 058
- US-A- 5 733 625
- US-A1- 2003 022 581
- US-A1- 2008 023 873

## Description

### FIELD OF THE INVENTION

The invention generally relates to fiber blends useful as a thermal insulation batting. It particularly relates to blends containing cellulose acetate fibers, which can be made into nonwoven webs for heat-bonding and subsequent use as thermal insulation, for example, in garments and bedding.

### BACKGROUND OF THE INVENTION

One of nature's best thermal insulators is down. Down insulation is typically made from goose or duck plumage-the lofty, fluffy layer underneath the feathers. Down creates high-loft clusters that trap air and body heat. In addition to its ability to efficiently trap heat, down is very breathable, allowing it to wick moisture away to evaporate.

Down insulation, however, has several drawbacks including losing insulating power when wet, being relatively expensive, and posing animal welfare concerns.

A typical alternative to down insulation is a polyester nonwoven insulation batting. The batting can include short-staple or continuous polyester filament. While it addresses some of the concerns of down, polyester battings do not deliver the warmth-to-loft performance with the comfort of down. Moreover, since most currently available polyester fiber is sourced from petroleum, the fiber is essentially non-biodegradable and noncompostable.

US 5,677,058 refers to fibers such as caustic-treated non-round polyester fibers are prepared having certain lubricants strongly adhered to the surface thereof.

WO 2018/160584 refers to staple fibers and filament yarns formed from cellulose esters, such as cellulose acetate, along with methds of making the fibers and their use in nonwoven fabrics and articles.

Thus, there is a need in the art to provide alternative and/or improved thermal insulation for garment and household applications that does not suffer from one or more of these drawbacks.

The present invention addresses this need as well as others, which will become apparent from the following description and the appended claims.

### SUMMARY OF THE INVENTION

The invention is as set forth in the appended claims.

Briefly, in one aspect, the invention provides a fiber blend. The blend comprises:
(a) a staple fiber formed from cellulose acetate; and
(b) a binder fiber,
wherein the staple fiber has a crimp frequency of 10 to 30 crimps per inch (CPI) measured according to ASTM D3937, a cut length of 55 mm or less, and a non-round cross-sectional shape;
wherein the amount of cellulose acetate staple fiber is at least 40 wt.% relative to the weight of all fibers in the blend;
wherein the amount of the binder fiber is in the range from 10 to 30 wt.% of the blend;
wherein the staple fiber has a denier per filament of less than 2.0.

In another aspect, the invention provides a thermally-bonded, nonwoven web comprising the blend according to the invention.

In yet another aspect, the invention provides a heat-insulating interliner comprising the nonwoven web according to the invention.

In yet another aspect, the invention provides an article of manufacture comprising the interliner according to the invention. Examples of such an article include a garment, a shoe, a glove, a pillow, a comforter, a blanket, a throw, a mattress, a mattress pad, a sleeping bag, and a cushion.

### BRIEF DESCRIPTION OF THE DRAWINGS

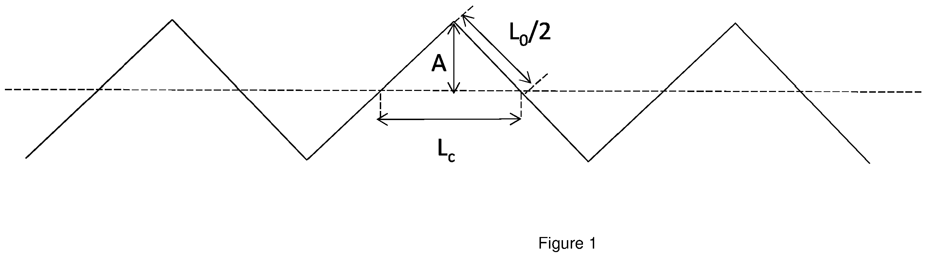

Figure 1 is an illustration of a crimped filament.

### DETAILED DESCRIPTION OF THE INVENTION

It has been surprisingly discovered that a thermally-bonded, nonwoven web derived from a fiber blend comprising a certain cellulose acetate staple fiber and a binder fiber can provide superior properties, such as thermal insulation or soft-hand feel, compared to webs made from other synthetic fiber or fiber blends, particularly at equivalent loft. Based on cellulose acetate fibers, the web according to the invention has the additional benefit of being sourced from renewable materials (e.g., wood pulp and cotton linters).

Thus, in one aspect, the invention provides a fiber blend. The blend comprises (a) a staple fiber formed from cellulose acetate and (b) a binder fiber. The cellulose acetate staple fiber may be characterized by having a crimp frequency of 10 to 30 crimps per inch (CPI) measured according to ASTM D3937, a cut length of 55 mm or less, and a non-round cross-sectional shape, wherein the amount of cellulose acetate staple fiber is at least 40 wt.% relative to the weight of al fibers in the blend, wherein the amount of the binder fiber is in the range from 10 to 30 wt.% of the blend, wherein the staple fiber has a denier per filament of less than 2.0.

Cellulose acetate (CE) staple fibers useful in the present invention are described in U.S. Provisional Patent Appl. Nos. 62/464,715 (PCT/US2018/20003) filed on February 28, 2017, 62/587,228 (PCT/US2018/20003) filed on November 16, 2017, and 62/595,872 (PCT/US2018/20003) filed on December 7, 2017; and Int'I Patent Application No. PCT/US2018/019995 filed on February 27, 2018..

Briefly, the CA staple fibers may be formed from cellulose diacetate, cellulose triacetate, or mixtures thereof. The CA can have a degree of substitution ranging from 1.9 to less than 3. As used herein, the term "degree of substitution" or "DS" refers to the average number of acyl substituents per anhydroglucose ring of the cellulose polymer, wherein the maximum degree of substitution is 3.0. In some cases, the CA may have an average degree of substitution of at least 1.95, 2.0, 2.05, 2.1, 2.15, 2.2, 2.25, or 2.3 and/or not more than 2.9, 2.85, 2.8, 2.75, 2.7, 2.65, 2.6, 2.55, 2.5, 2.45, 2.4, or 2.35. The DS may also fall within one or more of the above ranges (e.g., from 2.2 to 2.8). In some cases, at least 90, 91, 92, 93, 94, 95, 96, 97, 98, or 99 percent of the CA has a DS of greater than 2.15, 2.2, or 2.25. In some cases, at least 90 percent of the CA can have a DS of greater than 2.2, 2.25, 2.3, or 2.35. Typically, acetyl groups can make up at least 1, 5, 10, 15, 20, 25, 30, 35, 40, 45, 50, 55, or 60 percent and/or not more than 99, 95, 90, 85, 80, 75, or 70 percent of the total acyl substituents.

The CA may have a weight-average molecular weight (Mw) of not more than 90,000, measured using gel permeation chromatography with N-methyl-2-pyrrolidone (NMP) as the solvent. In some case, the CA may have a Mw of at least 10,000, at least 20,000, 25,000, 30,000, 35,000, 40,000, or 45,000 and/or not more than 100,000, 95,000, 90,000, 85,000, 80,000, 75,000, 70,000, 65,000, 60,000, or 50,000.

The CA may be formed by any suitable method. In some cases, the CA may be formed by reacting a cellulosic material such as wood pulp with acetic anhydride and a catalyst in an acidic reaction medium to form a CA flake. The flake may then be dissolved in a solvent, such as acetone or methyl ethyl ketone, to form a "solvent dope," which can be filtered and sent through a spinnerette to form CA fibers. In some cases, up to 1 weight percent or more of titanium dioxide or other delusterant may be added to the dope prior to filtration, depending on the desired properties and ultimate enduse of the fibers.

In some cases, the solvent dope or flake used to form the CA fibers may include few or no additives in addition to the CE. Such additives can include, but are not limited to, plasticizers, antioxidants, thermal stabilizers, pro-oxidants, acid scavengers, inorganics, pigments, and colorants. In some cases, the CA fibers can include at least 90, 90.5, 91, 91.5, 92, 92.5, 93, 93.5, 94, 94.5, 95, 95.5, 96, 96.5, 97, 97.5, 98, 98.5, 99, 99.5, 99.9, 99.99, 99.995, or 99.999 percent of CE, based on the total weight of the fiber. Fibers formed according to the present invention may include not more than 10, 9.5, 9, 8.5, 8, 7.5, 7, 6.5, 6, 5.5, 5, 4.5, 4, 3.5, 3, 2.5, 2, 1.5, 1, 0.5, 0.1, 0.01, 0.005, or 0.001 weight percent of additives, including the specific additives listed herein.

The CA fibers can achieve higher levels of biodegradability and/or compostability without using additives that have traditionally been used to facilitate environmental non-persistence of similar fibers. Such additives can include, for example, photodegradation agents, biodegradation agents, decomposition accelerating agents, and various types of other additives. In some cases, despite being substantially free of these types of additives, the CA fibers and articles according to the invention can unexpectedly exhibit enhanced biodegradability and compostability when tested under industrial, home, and/or soil conditions.

In some embodiments, the CA fibers may be substantially free of photodegradation agents. For example, the fibers may include not more than 1, 0.75, 0.50, 0.25, 0.10, 0.05, 0.025, 0.01, 0.005, 0.0025, or 0.001 weight percent of photodegradation agent, based on the total weight of the fiber, or the fibers may include no photodegradation agents. Examples of such photodegradation agents include, but are not limited to, pigments which act as photooxidation catalysts and are optionally augmented by the presence of one or more metal salts, oxidizable promoters, and combinations thereof. Pigments can include coated or uncoated anatase or rutile titanium dioxide, which may be present alone or in combination with one or more of the augmenting components such as, for example, various types of metals. Other examples of photodegradation agents include benzoins, benzoin alkyl ethers, benzophenone and its derivatives, acetophenone and its derivatives, quinones, thioxanthones, phthalocyanine and other photosensitizers, ethylene-carbon monoxide copolymer, aromatic ketone-metal salt sensitizers, and combinations thereof.

In some embodiments, the CA fibers may be substantially free of biodegradation agents and/or decomposition agents. For example, the fibers may include not more than 1, 0.75, 0.50, 0.25, 0.10, 0.05, 0.025, 0.01, 0.005, 0.0025, 0.0020, 0.0015, 0.001, 0.0005 weight percent of biodegradation agents and/or decomposition agents, based on the total weight of the fiber, or the fibers may include no biodegradation and/or decomposition agents. Examples of such biodegradation and decomposition agents include, but are not limited to, salts of oxygen acid of phosphorus, esters of oxygen acid of phosphorus or salts thereof, carbonic acids or salts thereof, oxygen acids of phosphorus, oxygen acids of sulfur, oxygen acids of nitrogen, partial esters or hydrogen salts of these oxygen acids, carbonic acid and its hydrogen salt, sulfonic acids, and carboxylic acids.

Other examples of such biodegradation and decomposition agents include an organic acid selected from the group consisting of oxo acids having 2 to 6 carbon atoms per molecule, saturated dicarboxylic acids having 2 to 6 carbon atoms per molecule, and lower alkyl esters of the oxo acids or the saturated dicarboxylic acids with alcohols having from 1 to 4 carbon atoms. Biodegradation agents may also comprise enzymes such as, for example, a lipase, a cellulase, an esterase, and combinations thereof. Other types of biodegradation and decomposition agents can include cellulose phosphate, starch phosphate, calcium secondary phosphate, calcium tertiary phosphate, calcium phosphate hydroxide, glycolic acid, lactic acid, citric acid, tartaric acid, malic acid, oxalic acid, malonic acid, succinic acid, succinic anhydride, glutaric acid, acetic acid, and combinations thereof.

The CA fibers may also be substantially free of several other types of additives that have been added to other fibers to encourage environmental non-persistence. Examples of these additives can include, but are not limited to, polyesters, including aliphatic and low molecular weight (e.g., less than 5000) polyesters, enzymes, microorganisms, water soluble polymers, modified cellulose acetate, water-dispersible additives, nitrogen-containing compounds, hydroxy-functional compounds, oxygen-containing heterocyclic compounds, sulfur-containing heterocyclic compounds, anhydrides, monoepoxides, and combinations thereof. In some cases, the CA fibers may include not more than 0.5, 0.4, 0.3, 0.25, 0.1, 0.075, 0.05, 0.025, 0.01, 0.0075, 0.005, 0.0025, or 0.001 weight percent of these types of additives, or the CA fibers may not include any of these types of additives.

At the spinnerette, the solvent dope can be extruded through a plurality of holes to form continuous cellulose acetate filaments. The filaments may be gathered together to form bundles of several hundred, or even thousand, individual filaments. Each of these bundles, or bands, may include at least 100, 150, 200, 250, 300, 350, or 400 and/or not more than 1000, 900, 850, 800, 750, or 700 fibers. The spinnerette may be operated at any speed suitable to produce filaments and bundles having desired size and shape.

Multiple bundles may be assembled into a filament yarn, such as a crimped or uncrimped tow band. As used herein, a "filament yarn" or "tow yarn" refers to a yarn formed from a plurality of continuous, untwisted individual filaments. The filament yarn may be of any suitable size and, in some embodiments, may have a total denier of at least 20,000, 25,000, 30,000, 35,000, 40,000, 45,000, 50,000, 75,000, 100,000, 150,000, 200,000, 250,000, 300,000, 350,000, 400,000, 450,000, or 500,000. Alternatively, or in addition, the total denier of the filament yarn can be no more than 5,000,000, 4,500,000, 4,000,000, 3,500,00, 3,000,000, 2,500,000, 2,000,000, 1,500,000, 1,000,000, 900,000, 800,000, 700,000, 600,00, 500,000, 400,000, 350,000, 300,000, 250,000, 200,000, 150,000, 100,000, 95,000, 90,000, 85,000, 80,000, 75,000, or 70,000.

The individual filaments, which are extruded in a generally longitudinally aligned manner and which ultimately form the filament yarn, may also be of any suitable size. For example, each filament may have a linear denier per filament (weight in g of 9000 m fiber length) of at least 0.1, 0.5, 1, or 1.5, measured according to ASTM D1577-01 using the FAVIMAT vibroscope procedure. As used herein, the term "filament" refers to an elongated, continuous single strand fiber and is distinguished from a staple fiber, which has been cut to a specified length, as described in further detail below. In various embodiments, the fiber blend may contain CA staple fibers with two or more different DPFs.

The individual filaments discharged from the spinnerette may have any non-round cross-sectional shape. Exemplary such cross-sectional shapes include, but are not limited to, Y-shaped, I-shaped (dog bone), closed C-shaped, tri-lobal, multi-lobal, X-shaped, or crenulated. When a filament has a multi-lobal cross-sectional shape, it may have at least 4, 5, or 6 or more lobes. In some cases, the filaments may be symmetric along one or more, two or more, three or more, or four or more axes, and, in other embodiments, the filaments may be asymmetrical. In some cases, the CA staple fibers may be Y-shaped or tri-lobal. As used herein, the term "cross-section" or variations thereof generally refer to the transverse cross-section of the filament measured in a direction perpendicular to the direction of elongation of the filament. The cross-section of the filament may be determined and measured using Quantitative Image Analysis (QIA). Staple fibers may have a cross-sectional shape similar to the filaments from which they were formed.

The cross-sectional shape of an individual filament (or staple fiber) may be characterized according to its deviation from a round cross-sectional shape. In some cases, this deviation can be characterized by the shape factor of the filament or fiber, which is determined by the following formula: Shape Factor = Perimeter / (4π x Cross-Sectional Area)1/2. In some embodiments, the shape factor of the individual CA filaments or fibers can be at least 1.01, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, 2.25, 2.5, 2.75, 3, or 3.25 and/or not more than 5, 4.8, 4.75, 4.5, 4.25, 4, 3.75, 3.5, 3.25, 3, 2.75, 2.5, 2.25, 2, 1.75, 1.5, or 1.25. (Note: these values may also be expressed as ratios of the listed numbers to 1 - e.g., 1.45:1.) The shape factor of filament or fiber having a round cross-sectional shape is 1. The shape factor can be calculated from the cross-sectional area of a filament or fiber, which can be measured using QIA.

Additionally, the cross-sectional shape of the filament or fiber may also be compared to a round cross-section according to its equivalent diameter, which is the equivalent diameter of a round filament or fiber having a cross-sectional area equal to a given filament or fiber. In some embodiments, the CA filaments or fibers can have an equivalent diameter of at least 0.0022, 0.0023, 0.0024, 0.0025, 0.0030, 0.0033, 0.0035, 0.0040, 0.0045, 0.0050, 0.0055, 0.0060, 0.0065, 0.0070, 0.0073, 0.0075, 0.0080, 0.0085, 0.0090, 0.0095, 0.0100, 0.0103, 0.0104, 0.0105, 0.0110, 0.0112, 0.0115, 0.0120, 0.0125, 0.0126, 0.013, 0.014, or 0.015 mm. Alternatively, or in addition, the CA filaments or fibers may have an equivalent diameter of not more than 0.0400, 0.0375, 0.036, 0.0359, 0.0350, 0.0033, 0.0327, 0.0325, 0.0300, 0.0275, 0.0250, 0.0232, 0.0225, 0.0200, 0.0179, 0.0175, 0.016, 0.0150, 0.0127, 0.0125, or 0.0120 mm. The equivalent diameter is calculated from the cross-section of a filament or fiber, measured using QIA.

The filament yarn (or tow yarn) may be passed through a crimping zone where a patterned wavelike shape is imparted to at least a portion, or substantially all, of the individual filaments.

The crimping zone includes at least one crimping device for mechanically crimping the filament yarn. An example of a mechanical crimper includes a "stuffing box" or "stuffer box" crimper that uses a plurality of rollers to generate friction, which causes the fibers to buckle and form crimps inside the box. Other types of crimpers may also be used. Examples of equipment suitable for imparting crimp to a filament yarn are described in, for example, U.S. Patent Nos. 9,179,709; 2,346,258; 3,353,239; 3,571,870; 3,813,740; 4,004,330; 4,095,318; 5,025,538; 7,152,288; and 7,585,442. In some cases, the crimping step may be performed at a rate of at least 50, 75, 100, 125, 150, 175, 200, 225, or 250 meters per minute (m/min) and/or not more than 750, 600, 550, 500, 475, 450, 425, 400, 375, 350, 325, or 300 m/min.

In some cases, low crimp, low denier per filament of CA fibers may be formed that exhibit minimal breakage and a high degree of retained tenacity. As used herein, the term "retained tenacity" refers to the ratio of the average tenacity of a crimped filament (or fiber) to the average tenacity of an identical but uncrimped filament (or fiber), expressed as a percent. For example, a crimped fiber having a tenacity of 1.3 gram-force/denier (g/denier) would have a retained tenacity of 87 percent if an identical but uncrimped fiber had a tenacity of 1.5 g/denier.

In some embodiments, crimped CA filaments may have a retained tenacity of at least 50, 55, 60, 65, 70, 75, 80, 85, 90, 95, 97, or 99 percent. Additionally, or in the alternative, the retained tenacity of the CA filaments may be no more than 99, 97, 95, 90, 92, 90, 87, 85, 82, or 80 percent, calculated as described herein. The retained tenacity may be 100 percent in some cases. Crimped filaments exhibiting a retained tenacity in these ranges is unexpected in light of the inherent weakness of most cellulose acetate filaments. In some cases, the final cellulose acetate staple fibers may exhibit similar retained tenacities as compared to identical but uncrimped staple fibers.

Crimping is performed such that the final staple fibers have a crimp frequency of at least 10, 11, 12, 13, or 14 and/or not more than 30, 29, 28, 27, 26, 25, 24, 23, 22, 21, 20, 19, 18, 17, 16, 15, 14, 13, 12, or 10crimps per inch (CPI), measured according to ASTM D3937. The crimp frequency of the crimped filament yarn may also fall within one or more of the above ranges (e.g., 10-30, 15-25, etc.), although the crimped filament yarn may have similar, or slightly different, values for crimp frequency than the staple fibers formed from cutting the filament yarn. For example, in some cases, the difference between the crimp frequency of the filament yarn and the staple fibers formed from that filament yarn may be at least 0.5, at least 1, or at least 1.5 CPI and/or not more than 5, not more than 2.5, not more than 2, not more than 1.5, not more than 1, or not more than 0.75 CPI. In some embodiments, when measured on a filament yarn, the crimp frequency can be measured in at least 5 different locations along the filament yarn. Typically, these locations can be spaced apart from one another and from the ends of the filament yarn by at least one-half inch.

According to some embodiments, the ratio of the crimp frequency to the linear denier per filament of the individual filaments can be greater than 2.75:1, 2.80:1, 2.85:1, 2.90:1, 2.95:1, 3.00:1, 3.05:1, 3.10:1, 3.15:1, 3.20:1, 3.25:1, 3.30:1, 3.35:1, 3.40:1, 3.45:1, or 3.50:1. In some cases, this ratio may be even higher, such as, for example, greater than 4:1, 5:1, 6:1, 7:1, 8:1, 9:1 or even 10:1 particularly when, for example, the filaments being crimped are relatively fine.

The crimp amplitude of the fibers or filaments may vary and can be, for example, at least 0.85, 0.90, 0.91, 0.92, 0.93, 0.94, 0.95, 0.96, 0.97, 0.98, 0.99, 1.00, 1.01, 1.02, 1.03, 1.04, or 1.05 mm. Additionally, or in the alternative, the crimp amplitude of the fibers or filaments may be ot than 1.75, 1.70, 1.65, 1.60, 1.58, 1.55, 1.50, 1.45, 1.40, 1.37, 1.35, 1.30, 1.29, 1.28, 1.27, 1.26, 1.25, 1.24, 1.23, 1.22, 1.21, 1.20, 1.19, 1.18, 1.17, 1.16, 1.15, 1.14, 1.13, 1.12, 1.11, 1.10, 1.09, 1.08, 1.07, 1.06, 1.05, 1.04, 1.03, 1.02, 1.01, 1.00, 0.99, 0.98, 0.97, 0.96, 0.95, 0.94, 0.93, 0.92, 0.91, or 0.90 mm.

Additionally, the staple CA fibers or filaments may have a crimp ratio of at least 1:1. As used herein, "crimp ratio" refers to the ratio of the noncrimped length of the fiber or filament to the crimped length of the fiber or filament. In some embodiments, the fibers or filaments may have a crimp ratio of at least 1:1, 1.025:1, 1.05:1, 1.075:1, 1.1:1, 1.125:1, 1.15:1, 1.16:1, 1.175:1, 1.2:1, 1.225:1, 1.23:1, 1.25:1, 1.275:1, 1.3:1, 1.325:1, 1.35:1, 1.375:1, 1.39:1, 1.4:1. Additionally, or in the alternative, the crimped tow or staple fibers may have a crimp ratio of no more than 2.01:1, 2:1, 1.975:1, 1.95:1, 1.925:1, 1.9:1, 1.875:1, 1.85:1, 1.825:1, 1.8:1, 1.775:1, 1.75:1, 1.725:1, 1.7:1, 1.675:1, 1.65:1, 1.625:1, 1.6:1, 1.575:1, 1.55:1, 1.525:1, 1.5:1, 1.475:1, 1.45:1, 1.425:1, 1.4:1, 1.39:1, 1.375:1, or 1.35:1.

Crimp amplitude and crimp ratio are measured according to the following calculations, with the dimensions referenced being shown in Figure 1. Crimped length (L_{c}) is equal to the reciprocal of crimp frequency (1/crimp frequency), and the crimp ratio is equal to the straight length (L₀) divided by the crimped length (L₀:L_{c}). The amplitude (A) is calculated geometrically using half of the straight length (L₀/2) and half of the crimped length (L_{c}/2). Any uncrimped length may be measured using conventional methods.

After crimping, the filament yarn may further be dried in a drying zone in order to reduce the moisture and/or solvent content of the filament yarn. In some cases, the drying performed in the drying zone may be sufficient to reduce the final moisture content of the filament yarn to at least 3.5, 4, 4.5, 5, 5.5, 6, 6.5, or 7 weight percent, based on the total weight of the filament yarn and/or not more than 9, 8.5, 8, 7.5, 7, or 6.5 weight percent. Any suitable type of dryer can be used in the drying zone such as, for example, a forced air oven, a drum dryer, or a heat setting channel. The dryer may be operated at any temperature and pressure conditions that provide the requisite level of drying without damaging the filament yarn. A single dryer may be used, or two or more dryers may be used in parallel or in series to achieve the desired final moisture content.

Once dried, the filament yarn may be baled in a baling zone, and the resulting bales may be introduced into a cutting zone, where the filament yarns may be cut into staple fibers. As used herein, the term "staple fiber" refers to a fiber cut from a filament yarn that has a discrete length, which is typically less than 150 mm. In some embodiments, the staple fibers of the present invention may be cut to a length of at least 1, 1.5, 2, 3, 4, 5, 6, 8, 10, 12, 15, 17, 20, 22, 25, 27, 30, 32, or 35 mm. Additionally, or in the alternative, the staple fibers may have a cut length of not more than 55, 51, 50, 45, 40, 35, 30, 25, 20, 10, or 8 mm. The cut length of the CA staple fibers may also fall within one or more of the above ranges (e.g., 10 to 55, 20 to 55, 30 to 55, or 30 to 51 mm). Any suitable type of cutting device may be used that is capable of cutting the filaments to a desired length without excessively damaging the fibers. Examples of cutting devices can include, but are not limited to, rotary cutters, guillotines, stretch breaking devices, reciprocating blades, and combinations thereof. Once cut, the staple fibers may be baled or otherwise bagged or packaged for subsequent transportation, storage, and/or use. The cut length of the staple fibers may be measured according to ASTM D-5103.

The CA staple fibers (or filament yarns used to form such fibers) may be at least partially coated with at least one fiber finish. As used herein, the terms "fiber finish" and "finish" refer to any suitable type of coating that, when applied to a fiber, modifies friction exerted by and on the fiber, and alters the ability of the fibers to move relative to one another and/or relative to a surface. Finishes are not the same as adhesives, bonding agents, or other similar chemical additives which, when added to fibers, prevent movement between the fibers by adhering them to one another. Finishes, when applied, continue to permit the movement of the fibers relative to one another and/or relative to other surfaces, but may modify the ease of this movement by increasing or decreasing the frictional forces. In some cases, finishes may not modify the frictional forces between fibers, but can, instead, impart one or more other desirable properties to the final coated fiber.

In some embodiments, the staple fibers may include at least two finishes applied to all or a portion of the staple fiber surface at one or more points during the fiber production process. In other cases, the staple fibers may only include one finish while, in other cases, the fibers may not include any finish at all. When two or more finishes are applied to the fibers, the finishes may be applied as a blend of two or more different finishes, or the finishes may be applied separately at different times during the process. For example, in some cases, the staple fibers may be at least partially coated with a spinning or spin finish applied to the filament yarn at one or more points during the process of forming the staple fibers. For example, in some embodiments, the spinning finish may be added to the fiber just after spinning. Alternatively, or in addition, the spinning finish may be added to the filament yarn just prior to the crimping step or anywhere between the spinning and crimping steps. In some cases, no spinning finish may be applied.

Any suitable method of applying the spinning finish may be used and can include, for example, spraying, wick application, dipping, or use of squeeze, lick, or kiss rollers. When used, the spinning finish may be of any suitable type and can be present on the filaments or staple fibers in an amount of at least 0.05, 0.10, 0.15, 0.20, 0.25, 0.30, 0.35, 0.40, 0.45, 0.50, 0.55, 0.60, 0.70, 0.80, 0.90, or 1 percent finish-on-yarn (FOY). Alternatively, or in addition, the spinning finish may be present in an amount of not more than 1.5, 1.4, 1.3, 1.2, 1.1, 1.0, 0.90, 0.80, 0.75, 0.70, 0.65, 0.60, or 0.50 percent finish-on-yarn (FOY) based on the total weight of the dried fiber. As used herein "FOY" or "finish on yarn" refers to the amount of finish on the staple fiber or filament, yarn less any added water. One or two or more types of spinning finishes may be used. In some cases, the spinning finish may be hydrophobic.

Additionally, or in the alternative, the staple fibers may include a top-coat finish added after crimping to impart certain properties or characteristics to the filaments. The top-coat finish may be added at one or more points during the formation of the staple fibers, including, for example, after the crimper, before the cutter, or after the cutter. When applied, the total amount of top-coat finish on the staple fibers or filament yarn may be at least 0.05, 0.10, 0.15, 0.20, 0.25, 0.30, or 0.35 and/or not more than 7, 6.5, 6, 5.5, 5, 4.5, 4, 3.5, 3, 2.5, 2, 1.5, 1.4, 1.3, 1.2, 1.1, 1.0, 0.90, 0.80, 0.75, 0.70, 0.65, 0.60, 0.55, 0.50, 0.45, 0.40, 0.35, 0.30, or 0.25 percent FOY, based on the total weight of the dried fiber or filament yarn. The fiber may include one or two or more types of top-coat finishes. In some embodiments, no top-coat finish may be used, while, in other embodiments, the top-coat finish may be applied even when no spinning finish is applied. In some embodiments when no spinning finish is applied, the fiber may include at least one ionic top-coat finish and may include not more than 0.05, 0.01, or 0.005% FOY, or 0% FOY of a mineral oil-based finish.

The top-coat finish may be ionic or non-ionic, and when ionic can be a cationic or an anionic finish. The finish may be in the form of a solution, an emulsion, or a dispersion. The top-coat finish may be applied to the fibers or filament yarn according to any known method, including those discussed previously with respect to the spinning finish. In some embodiments, the top-coat finish may be an aqueous emulsion and it may or may not include any type of hydrocarbon, oil including silicone oil, waxes, alcohol, glycol, or siloxanes. Examples of suitable top-coat finishes can include, but are not limited to, phosphate salts, sulfate salts, ammonium salts, and combinations thereof. Minor amounts of other components, such as surfactants, may also be present in order to enhance the stability and/or processability of the finish, and/or to make it more desirable for the intended end use of the fiber (e.g., non-irritating when the fiber will be contacted with a user's skin). Further, depending on the end use of the coated staple fibers, the finish may be compliant with various Federal and state regulations and can be, for example, non-animal, Proposition 65 compliant, and/or FDA food contact approved.

The specific type of top-coat finish applied to the filaments or fibers may depend, at least in part, on the final application for which the staple fibers will be used. In some embodiments, the top-coat finish may enhance the frictional forces between the fibers (or filaments) and/or with other surfaces that contact the fiber (or filaments), while, in other embodiments, the frictional forces between fibers and/or other surfaces may be reduced by the top-coat finish. Additionally, the finishes may impact the interaction of the coated fiber with water by modifying the hydrophilicity or hydrophobicity of the uncoated fiber to make it more or less hydrophilic or more or less hydrophobic. Use of a top-coat finish may or may not impart additional moisture to the fiber itself. In some embodiments, addition of the top-coat finish results in less than 1.0, 0.90, 0.80, 0.70, 0.60, 0.50, 0.40, 0.30, or 0.20% FOY moisture added to the uncoated fiber or filament.

In some cases, it has been found that top-coat finishes that enhance fiber-to-fiber friction as compared to an identical but uncoated fiber may be desirable for fibers of relatively low (e.g., not more than 8 CPI) or no crimp frequency, while, in other cases, it has been found that fibers having relatively higher crimp frequency (e.g., 16 CPI or higher) may benefit from top-coat finishes that either do not modify or reduce fiber-to-fiber friction as compared to an identical but uncoated fiber. In some cases, fibers having a crimp frequency in the range of from 8 to 16 CPI or 10 to 14 CPI may be processed with no top-coat finish. In some cases, only a top-coat finish may be applied to the fibers.

Further, in some embodiments, the top-coat (and/or spinning) finish may include other additives such as, for example, an anti-static agent. In addition, the finish may also include one or more other additives such as a wetting agent, antioxidants, biocides, anti-corrosion agents, pH control agents, emulsifiers, and combinations thereof. It is also possible that one or more additives may be added to a fiber as a coating, but without additional friction-modifying properties. For example, an antistatic agent may be applied to a fiber that does not otherwise include a top-coat finish and may be suitably formed into a nonwoven web as described herein.

When present, any suitable anti-static agent may be used. In some cases, the anti-static agent may include polar and/or hydrophilic compounds. When used, such additives may be present in any suitable amount such as, for example, at least 0.10, 0.15, 0.20, 0.25, 0.30, or 0.35 weight percent and/or not more than 3, 2.9, 2.8, 2.7, 2.6, 2.5, 2.4, 2.3, 2.2, 2.1, 2.0, 1.9, 1.8, 1.7, 1.6, 1.5, 1.4, 1.3, 1.2, 1.1, 1, 0.90, 0.80, 0.70, 0.60, or 0.50 weight percent, based on the total weight of the finish.

When the staple fibers are coated with an anti-static finish, the coated fiber may exhibit a static half-life of not more than 100, 90, 80, 75, 70, 65, 60, 55, 50, 45, 40, 35, 30, 25, 22, 20, 17, 15, 12, 10, 8, 5, 3, 2, 1.5, or 1 second, measured according to AATCC 84-2011. In some embodiments, the staple fibers may have a static half-life of not more than 30, 25, 20, 18, 15, 12, 10, or 8 minutes. In other embodiments, the static half-life of the coated fiber may be at least 30 seconds, at least 1 minute, at least 5, 8, 10, 15, 20, 30, 40, 50, 60, 75, 90, or 100 minutes and/or not more than 120, 110, 100, 90, 75, 60, 45, 40, 35, 30, 20, 15, or 12 minutes, measured according to AATCC 84-2011.

In some embodiments, this may be not more than 95, 90, 85, 80, 75, 70, 65, 60, 55, 50, 45, 40, 35, 30, 25, 20, 15, 10, or 5 percent of the static half-life of an identical but uncoated fiber. In some cases, the static half-life of the coated fiber may be at least 5, 10, 15, 20, 25, 30, 35, 40, 45, 50, 55, 60, 65, 70, 75, 80, 85, 90, or 95 percent less than the static half-life of an identical but uncoated fiber.

Alternatively, or in addition, the coated CA staple fibers may have a surface resistivity (Log R) of at least 2, 2.5, 3, 3.5, 4, 4.5, 5, 5.5, 6, 6.5, 7, 7.5, 8, 8.5, or 9 and/or not more than 11, 10.5, 10, 9.75, 9.5, 9.25, 9, 8.75, 8.5, 8.25, 8, 7.75, 7.5 measured according to AATCC TM76-2011. The surface resistivity was measured using a Monroe Electronics resistivity meter (Model No. 272A) connected to a Keithley Instruments isolation box (Model No. 6104) using an isolation cup for measuring the resistivity of the staple fibers. The surface resistivity (Log R) is calculated by multiplying the surface resistance by the ratio of the length of the area being tested to its width and expressing the result as the base 10 logarithm of the calculated value.

In some embodiments, the CA staple fibers or filament yarns may be at least partially coated with at least one spinning finish and at least one top-coat finish. The total amount of all finishes present on the staple fibers or filament yarns can be at least 0.15, 0.20, 0.25, 0.30, 0.35, 0.40, 0.45, 0.50, 0.55, 0.60, 0.65, 0.70, 0.75, 0.80, 0.85, 0.90, 0.95, 1.0, or 1.05 percent FOY and/or not more than 10, 9, 8, 7, 6, 5, 4, 3, 2, 1.5, 1.4, 1.3, 1.2, 1.1, 1.0, 0.90, 0.80, 0.75, 0.70, 0.65, 0.60, 0.55, 0.50, or 0.45 percent FOY, based on the total weight of the dried fiber. The amount of finish on the fibers as expressed by weight percent may be determined by solvent extraction according to ASTM D2257.

The coated staple fibers may exhibit a fiber-to-fiber (F/F) staple pad coefficient of friction (SPCOF) of at least 0.10, 0.15, 0.20, 0.25, 0.30, 0.32, 0.35, 0.40, 0.42, 0.45, 0.50, 0.55 and/or not more than 1, 0.95, 0.90, 0.85, 0.80, 0.75, 0.70, 0.65, 0.60, 0.55, 0.50, 0.45, 0.40, or 0.35, measured as described in U.S. Patent No. 5,683,811, modified as below.

A staple pad of the fibers whose friction is to be measured is sandwiched between a weight on top of the staple pad and a base that is underneath the staple pad and is mounted on the lower crosshead of an Instron 5966 Blue Hill machine (product of Instron Engineering Corp., Canton, Mass) with Series IX software. The staple pad is prepared by carding the staple fibers (using a roller top laboratory card) to form a batt which is cut into sections, that are 12 ins in length and 3 ins wide, with the fibers oriented in the length dimension of the batt. Enough sections are stacked up so the staple pad weighs 3 g. The metal weight on top of the staple pad is of length (L)100 mm, width (W) 45 mm, and height (H) 40 mm, and weighs 1200 gm. The surfaces of the weight and of the base that contact the staple pad are covered with 60 GC sandpaper attached with doubled sided tape, so that it is the sandpaper that contacts the surfaces of the staple pad. The staple pad is placed on the base. The weight is placed on the middle of the pad. A nylon monofil line is attached to one of the smaller vertical (W×H) faces of the weight and passed around a small pulley up to the upper crosshead of the Instron, making a 90 degree wrap angle around the pulley.

A computer interfaced to the Instron is given a signal to start the test. The lower crosshead of the Instron is moved down at a speed of 150 (+/-30) mm/min. The staple pad, the weight and the pulley are also moved down with the base, which is mounted on the lower crosshead. Tension increases in the nylon monofil as it is stretched between the weight, which is moving down, and the upper crosshead, which remains stationary. Tension is applied to the weight in a horizontal direction, which is the direction of orientation of the fibers in the staple pad. Initially, there is little or no movement within the staple pad. The force applied to the upper crosshead of the Instron is monitored by a load cell and increases to a threshold level, when the fibers in the pad start moving past each other. (Because of the Emery cloth at the interfaces with the staple pad, there is little relative motion at these interfaces; essentially any motion results from fibers within the staple pad moving past each other.) The highest friction force level indicates what is required to overcome the fiber-to-fiber static friction and is recorded. The lowest friction force is the dynamic friction force. The average friction force is the average of static and dynamic friction force.

Four values are used to compute the average friction force (average load at 20-60 mm peel extension). The staple pad fiber-to-fiber coefficient of friction is determined by dividing the measured average friction force by the 1200 gm weight. The scroop value could be determined as the difference between static and dynamic friction force.

Additionally, or in the alternative, the coated staple fibers may exhibit a fiber-to-metal (F/M) staple pad coefficient of friction (SPCOF) of at least 0.10, 0.12, 0.15, 0.17, 0.20, 0.22, 0.25, 0.30, 0.32 0.35, 0.40, 0.42, 0.45, 0.48, 0.50, 0.55, 0.60 and/or not more than 1, 0.95, 0.90, 0.85, 0.80, 0.75, 0.70, 0.65, 0.60, 0.55, 0.50, 0.45, 0.40, 0.37, 0.35, 0.32, or 0.30, measured as described in measured as described in U.S. Patent No. 5,683,811, modified as above and with the exception that the 1200-gram metal weight surface is not covered with the staple pad or the sandpaper when measuring the fiber-to-metal SPCOF.

In some cases, when the filament yarn is coated with a spinning and/or top-coat finish, the filament yarn may exhibit a fiber-to-fiber (F/F) coefficient of friction (COF) of at least 0.01, 0.02, 0.03, 0.04, 0.05, 0.06, 0.10, 0.15, 0.20, 0.25, 0.30, 0.35, or 0.40 and/or not more than 0.55, 0.50, 0.45, 0.42, 0.40, 0.35, 0.33, 0.30, 0.25, 0.20, 0.15, 0.14, 0.13, 0.12, 0.11, 0.10, 0.09, 0.08, 0.07, or 0.06. Values for the F/F coefficient of friction (COF) of continuous filaments can be determined according to ASTM D3412 with the specified yarn parameters, a speed of 100 m/min, an input tension of 10 grams, and a single twist applied to the filament.

In another embodiment, yarns described herein may have a F/F coefficient of friction value within one or more of the above ranges measured using a continuous tension tester electronic device (CTT-E) according to ASTM D3412 with the specified yarn parameters, a speed of 20 m/min, an input tension of 10 grams, and a single twist applied to the filament.

Additionally, filament yarns coated with a spinning and/or top-coat finish according to embodiments of the present invention may exhibit a fiber-to-metal (F/M) coefficient of friction of at least 0.01, 0.05, 0.10, 0.15, 0.20, 0.25, 0.30, 0.35, 0.40, 0.45, 0.50, 0.55, 0.57, 0.60, or 0.65 and/or not more than 0.80, 0.75, 0.70, 0.65, 0.60, 0.55, 0.50, 0.45, or 0.40. Values for the F/M coefficient of friction of continuous filaments can be determined according to ASTM D3108 with the specified yarn parameters, a speed of 100m/min, and an input tension of 48 grams.

In another embodiment, yarns described herein may have a F/M coefficient of friction value within one or more of the above ranges measured using a continuous tension tester electronic device (CTT-E) according to ASTM D3108 with the specified yarn parameters, a speed of 100 m/min, and an input tension of 10 grams.

The fiber-to-fiber cohesion of the coated staple fibers may be described by the "scroop value," exhibited by the coated fiber. The scroop value, measured as the difference between static and dynamic pulling forces, of the coated fibers described herein can be less than 160 grams-force (g). In some embodiments, the coated staple fibers may exhibit a scroop value of at least 10, 15, 20, 25, 30, 35, 40, 45, 50, 55, 60, 65, 70, 75, 80, 85, 90, 95, 100, 105, 110, 115, 120, or 150 grams-force (gf) and/or not more than 275, 250, 200, 195, 190, 185, 180, 175, 170, 165, 160, 155, 150, 145, 140, 135, 130, 125, 120, 115, 110, 105, or 100 gf. Coated staple fibers with lower cohesion, as indicated by a lower scoop values, may form nonwoven materials with an overall softer feel.

The static and dynamic friction (in gram-force) and the resulting scroop value may be calculated from the staple pad friction method described in U.S. Patent Nos. 5,683,811 and 5,480,710, but using an Instron 5500 series machine, rather than an Instron 1122 machine. The fiber-to-fiber static friction is determined as described in the '710 patent as the maximum threshold pulling force at low pulling speed upon reaching equilibrium pulling behavior, and the fiber-to-fiber dynamic friction is similarly calculated, but is the minimum threshold level of force as the staple pad traverses a slip-stick behavior. The scroop is calculated as the difference between static and dynamic friction pulling forces with units of gram-force.

The coated staple fibers may also exhibit higher-than-expected strength. For example, in some embodiments, the coated staple fibers may be formed from filaments that exhibit a tenacity of at least 0.5, 0.55, 0.60, 0.65, 0.70, 0.75, 0.80, 0.85, 0.90, 0.95, 1.0, 1.05, 1.1, 1.15, 1.20, 1.25, 1.30, or 1.35 grams-force/denier (g/denier) and/or not more than 2.50, 2.45, 2.40, 2.35, 2.30, 2.25, 2.20, 2.15, 2.10, 2.05, 2.00, 1.95, 1.90, 1.85, 1.80, 1.75, 1.70, 1.65, 1.60, 1.55, 1.50, 1.47, 1.45, or 1.40 g/denier, measured according to ASTM D3822. Additionally, in some embodiments, the elongation at break of the coated staple fibers (or filaments from which the staple fibers are formed) can be at least 5, 6, 10, 15, 20, or 25 percent and/or not more than 50, 45, 40, 35, or 30 percent, measured according to ASTM D3822.

Traditionally, CA fibers and filaments are coated with a plasticizer in order to facilitate formation and ultimate biodegradability of the final fibrous article. However, the fibers and filament yarns according to the invention can include little or no plasticizer and can unexpectedly exhibit enhanced biodegradability under industrial, home, and soil conditions, even as compared to cellulose acetate fibers with higher levels of plasticizer.

In some embodiments, the fibers can include not more than 30, 27, 25, 22, 20, 17, 15, 12, 10, 9.5, 9, 8.5, 8, 7.5, 7, 6.5, 6, 5.5, 5, 4.5, 4, 3.5, 3, 2.5, 2, 1.5, 1, 0.5, 0.25, or 0.10 percent of plasticizers, based on the total weight of the fiber, or the fibers may include no plasticizer. When present, the plasticizer may be incorporated into the fiber itself by being blended with the solvent dope or cellulose acetate flake, or the plasticizer may be applied to the surface of the fiber or filament by spraying, by centrifugal force from a rotating drum apparatus, or by an immersion bath.

Examples of plasticizers that may or may not be present in or on the fibers can include, but are not limited to, aromatic polycarboxylic acid esters, aliphatic polycarboxylic acid esters, lower fatty acid esters of polyhydric alcohols, and phosphoric acid esters. Further examples can include, but are not limited to, dimethyl phthalate, diethyl phthalate, dibutyl phthalate, dihexyl phthalate, dioctyl phthalate, dimethoxyethyl phthalate, ethyl phthalylethyl glycolate, butyl phthalylbutyl glycolate, tetraoctyl pyromellitate, trioctyl trimellitate, dibutyl adipate, dioctyl adipate, dibutyl sebacate, dioctyl sebacate, diethyl azelate, dibutyl azelate, dioctyl azelate, glycerol, trimethylolpropane, pentaerythritol, sorbitol, glycerin triacetate (triacetin), diglycerin tetracetate, triethyl phosphate, tributyl phosphate, tributoxyethyl phosphate, triphenyl phosphate, and tricresyl phosphate, and combinations thereof. In some embodiments, the CA fibers may not include any type of plasticizer or other additive, and can consist essentially of, or consist of, CA and not more than 1 percent FOY of a spinning finish.

Additionally, the CA fibers may not have undergone additional treatment steps designed to enhance the biodegradability of the fibers. For example, the fibers may not have been hydroylzed or treated with enyzmes or microorganisms. The fibers may include not more than 1, 0.75, 0.5, 0.25, 0.1, 0.05, or 0.01 weight percent of an adhesive or bonding agent and may include less than 1, 0.75, 0.5, 0.25, 0.1, 0.05, or 0.01 weigh percent of modified or substituted cellulose acetate. In some embodiments, the fibers may not include any adhesive or bonding agent and may not be formed from any substituted or modified CE. Substituted or modified CA may include CA that has been modified with a polar substituent, such as a substituent selected from the group consisting of sulfates, phosphates, borates, carbonates, and combinations thereof.

There is no particular restriction on the type of binder fiber that can be used in the fiber blend of the invention, provided that the binder fiber (or at least a portion of it) has a lower melting point than that of the CA fiber. During heat-setting, the binder fiber melts and bonds to the CA staple fibers at the cross-over points so that the bonded batting retains the desired configuration and density. The binder is used to give the heat-bonded batting stability and recoverable stretch. The binder fiber can be processed on conventional textile machinery, e.g. a card, and be distributed throughout the blend. It is desirable, therefore, that the DPF of the binder fiber be compatible with the denier of the CA staple fibers so that it can be distributed throughout the blend by conventional textile processing. The DPF of the binder fiber will generally range from 0.5 to 10, 0.5 to 8, or 0.5 to 6. Ideally, it could be preferable to use a binder fiber of substantially the same denier as that of the CA staple fiber, but a satisfactory result can be obtained by using binder fiber having a higher or a low denier.

The amount of binder fiber ranges from 10 to 30 wt% of the blend, preferably from 15 to 25 wt% of the blend. As the proportion of binder in the blend is increased, the resulting thermally-bonded batting will generally have greater rigidity, since the amount of bonding will depend largely on whether binder is available to bond the CA staple fiber at the cross-over points, and the statistical probability of this increases with an increase in the amount of binder and with an increase in the amount of CA fiber. It will be understood that binder fiber is not generally present as such in the thermally-bonded batting, because the binder fiber will generally melt during the heat-bonding and will then congeal on the CA fiber during the subsequent cooling stage.

As noted, the binder fiber (or at least a portion of it) has a lower melting point than the CA fiber. Typically, the binder fiber has a stick temperature above 80°C and below that of the CA fiber. In some cases, the binder fiber has a stick temperature between 80 and 200°C. Fiber stick temperature is measured as described by Beaman and Cramer, J. Poly. Sci, 21, 228 (1956). A flat brass block is heated electrically to raise the block temperature at a slow rate. The fiber sample is suspended under slight tension between glass rods over and near the surface of the block. At intervals, the fiber is pressed against the block for 5 seconds with a 200-gram brass weight, which has been in continuous contact with the heated block. The fiber stick temperature is the temperature of the block when the fiber sticks to it for at least 2 seconds after removing the weight.

Generally, binder fibers may be made of polyesters, such as polyethylene terephthalate (PET); copolymers thereof; polyolefins, such as polypropylene and polyethylene; and mixtures thereof. In some cases, the binder fibers may be single-component fibers, while, in other cases, the fibers could be multicomponent fibers. When the binder fibers are bicomponent or multicomponent fibers, they may have any suitable cross-section, including, for example, in a side-by-side cross-section, a core-and-sheath cross-section, an islands-in-the-sea cross-section, a tipped cross-section, or a segmented pie cross-section. In some cases, the binder fiber can be a bicomponent fiber comprising a polyester (e.g., PET) and a copolyester (e.g., PETG). In some cases, the binder fiber can be a bicomponent fiber comprising a polyester (e.g., PET) and a polyolefin (e.g., PE or PP). And in some cases, the binder fiber can be a bicomponent fiber comprising a first polyolefin (e.g., PE) and a second polyolefin (e.g., PP).

The binder fiber typically has a cut length of 30 to 150 mm.

Specific examples of binder fibers are described in U.S. Patent Nos. 4,068,036; 4,129,675; and 4,304,817.

The fiber blend of the invention may be prepared by conventional blending techniques.

The fiber blend may then undergo a web forming step and a web bonding step to form a thermally-bonded, nonwoven web according to the invention. The web forming step may be performed under dry conditions, and the web bonding step may be carried out thermally. The web forming step may include one or more dry-laid processes. Dry-laid processes include air-laying and carding processes.

In an air-laid process, the fibers are entrained in streams of air, which are directed to a conveyor, onto which the fibers are deposited to form a web. In a carding process, fibers placed on a conveyor, or card, and are passed through a pair of rollers (or other movable surfaces) having a set of metal teeth or other gripping surfaces. As the surfaces move relative to one another, the fibers are mechanically separated and aligned to form a web.

In some cases, the CA staple fibers are lapped horizontally relative to the web's thickness. In other cases, after the dry-laying process, the web may be passed to a vertical lapping machine to impose a plurality of vertical parallel pleats on the web, relative to the web's thickness, which are then compressed to form a pleated web. The pleated web may be joined face-to-face with a second adhesive web to create a laminated composite web. Examples of vertical lapping machines are described in U.S. Patent Nos. 5,995,174; 7,591,049; and 9,783,915.

Once the web is formed, the web may be transported to a web bonding zone where it is heated to form a bonded web. Examples of thermal bonding methods include, but are not limited to, calendaring, ultrasonic bonding, and through-air oven bonding. Particular suitable combinations of web formation and bonding steps include, but are not limited to, formation by carding and thermal bonding or air-laying and thermal bonding.

In addition to the CA staple fibers and the binder fibers, the blend may contain one or more additional fibers. Other types of fibers suitable for use in the blend can include synthetic and/or natural fibers including, but not limited to, fibers formed from polyesters, polyamides, polyolefins, wool, cotton, flax, hemp, and combinations thereof.

The CA staple fibers are present in an amount of at least 40, 45, 50, 55, 60, 65, 70, 75, 80, 85, 90, or 95 percent, based on the total weight of the blend. Additionally, or in the alternative, the amount of CA fibers in the blend may be not more than 95, 90, 85, 80, 75, 70, 65, 60, 55, 50, 45, or 40percent, based on the total weight of the blend. One or more of the other fibers may be present in an amount of at least 5, 10, 15, 20, 25, 30, 35, 40, 45, 50, 55, 60, 65, 70, 75, 80, 85, 90, or 95 weight percent and/or not more than 95, 90, 85, 80, 75, 70, 65, 60, 55, 50, 45, 40, 35, 30, 25, 20, 15, 10, or 5 weight percent, based on the total weight of the blend. In one embodiment or in any of the mentioned embodiments, the amount of CA staple fiber is present in an amount of at 60-95, or 60-90, or 60-85, or 60-80, or 70-95, or 70-90, or 70-85, or 75-95, or 75-90, or 75-85, in each case as wt% based on the weight of the blend (e.g. all the fibers).

The process for forming a nonwoven web with CA fibers as described herein may be performed on a lab-, pilot-, and/or commercial scale. It has been discovered that use of the CA fibers described herein may provide processing advantages that permit formation of nonwoven webs on a larger, commercial scale. For example, in some embodiments, the web forming step may be carried out at a rate of at least 50, 75, 100, 125, 150, 175, 200, 225, 250, 275, 300, 325, 350, 375, 400, 425, 450, 475, or 500 meters per minute (m/min). Additionally, or in the alternative, the web forming step may be performed at a rate of not more than 600, 575, 550, 525, 500, 475, 450, 425, 400, 375, 350, 325, or 300 m/min.

In some embodiments, the nonwoven web of the invention can have a thickness of at least 0.25, 0.30, 0.35, 0.40, 0.45, 0.50, 0.55, 0.60, 0.65, 0.70, 0.75, 0.80, 0.85, 0.90, or 0.95 mm and/or not more than 2.75, 2.5, 2.25, 2.0, 1.9, 1.8, 1.7, 1.6, 1.5, 1.4, 1.3, 1.2, 1.1, 1.05, 0.95, 0.90, 0.85, 0.80, 0.75, 0.70, 0.65, 0.60, 0.55, or 0.50 mm. In some cases, the thickness of the nonwoven web can be at least 20, 30, 40, 50, 60, 70, 80, 90, 100, 125, 150, 175, or 200 mm and/or not more than 400, 375, 350, 325, 300, 275, 250, 225, 200, 175, 150, 125, 100, 90, 80, 70, 60, 50, 40, 30, or 20 mm. Thickness can be measured according to NWSP 120.1.R0 (15).

The nonwoven web may have a basis weight of at least 15, 20, 25, 30, 35, 40, 45, 50, 51, 52, 53, 54, 55, 56, 57, 58, 59, 60, 61, or 62 grams per square meter (gsm) and/or not more than 80, 75, 74, 73, 72, 71, 70, 69, 68, 67, 66, 65, 64, 63, or 62 gsm. In some cases, the nonwoven webs can have a basis weight of at least 50, 75, 100, 125, 150, 175, 200, 225, 250, 275, 300, 325, 350, 375, 400, 425, 450, 475, 500, 525, 550, 575, 600, 700, 800, 900, or 1000 gsm. Alternatively, or in addition, the nonwoven web may have a basis weight of not more than 8000, 7500, 7000, 6500, 6000, 5500, 5000, 4500, 4000, 3500, 3000, 2500, 2000, 1500, 1000, 500, 400, 300, 200, or 150 gsm. Basis weight can be measured according to NWSP 130.1.R0 (15).

According to some embodiments, the nonwoven web can exhibit one or more of the following characteristics: (i) a wet tensile strength in the machine direction (MD) in the range of 10 to 2000 Nm²/kg, normalized for the basis weight of the nonwoven; (ii) a wet tensile strength in the cross direction (CD) in the range of 10 to 1000 Nm²/kg, normalized for the basis weight of the nonwoven; (iii) a dry tensile strength in the machine direction (MD) in the range of 10 to 2000 Nm²/kg, normalized for the basis weight of the nonwoven; (iv) a dry tensile strength in the cross direction (CD) in the range of 10 to 1000 Nm²/kg, normalized for the basis weight of the nonwoven; an absorbency in the range of 5 to 20 grams of water per grams of fiber (g/g); and (vi) a real softness in the range of from 2.5 to 6 dB. In some cases, the nonwoven may exhibit at least two, at least three, at least four, at least five, or all of characteristics (i) through (vi) listed above.

The nonwoven web according to the present invention can have a dry tensile strength in the machine direction of at least 0.5, 1, 2, 5, 10, 12, 15, 20, 25, 30, 35, 40, 45, 50, 55, or 60 N/in and/or not more than 250, 245, 240, 235, 230, 225, 220, 215, 210, 205, 200, 195, 190, 185, 180, 175, 170, 165, 160, 155, 150, 145, 140, 135, 130, 125, 120, 115, 110, 100, 95, 90, 85, 90, 75, 60, 5, 50, 45, 40, 35, 30, or 25 N/in, measured according to the procedure described in NWSP 110.4 Option A with a 1-inch test strip. All tensile strength measurements were performed on a 1-inch strip of sample, unless otherwise stated.

Additionally, or in the alternative, the nonwoven web may have a dry tensile strength in the cross direction of at least 0.5, 1, 3, 4, 5, 10, 15, 20, 25, 30, 35, 40, or 45 N/in and/or not more than 225, 200, 190, 180, 175, 170, 160, 150, 140, 130, 125, 120, 110, 100, 90, 80, 75, 70, 60, 50, 45, 40, 35, 30, 25, 20, 15, 12, 10, 8, or 5 N/in, measured according to NWSP 110.4 Option A.

In some embodiments, the ratio of dry tensile strength in the machine direction to dry tensile strength in the cross direction (dry MD:CD) can be no more than 10:1, 9.5:1, 9:1, 8.5:1, 8:1, 7.5:1, 7:1, 6.5:1, 6:1, 5.5:1, 5:1, 4.5:1, 4:1, 3.5:1, 3:1, 2.5:1, 2:1, 1.5:1, 1.25:1, or 1.1:1. In some cases, the ratio of dry MD:CD can be at least 1.01:1, 1.05:1, 1.10:1, 1.15:1, 1.20:1, 1.25:1, 1.30:1, 1.35:1, 1.4:1, 1.45:1, 1.5:1, 1.55:1, 1.6:1, 1.65:1, 1.7:1, 1.75:1, 1.8:1, or 1.85:1.

The nonwoven web may have a wet tensile strength in the machine direction of at least 0.5, 1, 1.5, 5, 10, 15, 20, 25, 30, 35, 40, 45, or 50 N and/or not more than 250, 240, 230, 220, 210, 200, 190, 180, 170, 160, 150, 145, 140, 135, 130, 125, 120, 115, 110, 105, 100, 95, 90, 85, 80, 75, 70, 65, 60, 50, 40, 35, 30, 25, or 20 N/in, measured according to NWSP 110.4 Option A.

Additionally, the nonwoven web can have a wet tensile strength in the cross-direction of at least 0.5, 1, 1.5, 2, 3, 4, 5, 8, 10, 12, 15, 18, or 20 N/in and/or not more than 120, 115, 110, 105, 100, 95, 90, 85, 80, 75, 70, 65, 60, 55, 50, 45, 40, 35, 30, 28, 25, 20, 15, 12, or 10 N/in, measured according to NWSP 110.4 Option A.

In some embodiments, the ratio of wet tensile strength in the machine direction to wet tensile strength in the cross direction (wet MD:CD) can be no more than 10:1, 9.5:1, 9:1, 8.5:1, 8:1, 7.5:1, 7:1, 6.5:1, 6:1, 5.5:1, 5:1, 4.5:1, 4:1, 3.5:1, 3:1, 2.5:1, 2:1, 1.5:1, 1.25:1, or 1.1:1. In some cases, the ratio of wet MD:CD can be at least 1.01:1, 1.05:1, 1.10:1, 1.15:1, 1.20:1, 1.25:1, 1.30:1, 1.35:1, 1.4:1, 1.45:1, 1.5:1, 1.55:1, 1.6:1, 1.65:1, 1.7:1, 1.75:1, 1.8:1, or 1.85:1.

The tensile strength of the nonwoven web may be normalized according to the basis weight, thickness, and/or bulk density of the web. In some cases, the nonwoven web may have a wet tensile strength in the machine direction, normalized for the basis weight of the nonwoven, of at least 10, 20, 40, 60, 80, 100, 200, 300, 400, 500, 600, 700, 800, or 900 Nm²/kg and/or not more than 2000, 1900, 1800, 1700, 1600, 1500, 1400, 1300, 1200, 1100, 1000, 900, 800, 700, 600, 500, or 400 Nm²/kg, measured according to NWSP 110.4 Option A. Additionally, the nonwoven web may have a wet tensile strength in the cross-direction, normalized for the basis weight of the nonwoven, of at least 10, 20, 40, 60, 80, 100, 200, 240, or 250 Nm²/kg and/or not more than 1000, 900, 800, 700, 600, 560, 500, 400, or 300 Nm²/kg, measured according to NWSP 110.4 Option A.

The dry tensile strength in the machine direction, normalized according to basis weight of the nonwoven, may be at least 10, 25, 50, 100, 200, 300, 400, 500, 600, 700, 800, 900, or 1000 Nm²/kg and/or not more than 5000, 4500, 4000, 3500, 3400, 3000, 2500, 2000, 1500, 1000, 750, or 500 Nm²/kg, while the dry tensile strength in the cross direction normalized for basis weight can be at least 10, 25, 50, 80, 100, 200, 250, or 300 Nm²/kg and/or not more than 4000, 3500, 3000, 2500, 2000, 1500, 1200, 1000, 900, or 500 Nm²/kg, measured according to NWSP 100.4 Option A.

The nonwoven web may have a wet tensile strength in the machine direction, normalized for the thickness of the nonwoven, of at least 2000, 3000, 4000, 5000, 6000, 7000, 8000, 9000, 10,000, 15,000, 20,000, 25,000, 30,000, 35,000, 40,000, or 45,000 N/m and/or not more than 150,000, 145,000, 140,000, 135,000, 130,000, 125,000, 120,000, 117,000, 115,000, 110,000, 100,000, 80,000, 60,000, 40,000, or 20,000 N/m, measured according to NWSP 110.4 Option A. Additionally, the nonwoven web may have a wet tensile strength in the cross-direction, normalized for the thickness of the nonwoven, of at least 2000, 3000, 4000, 5000, 6000, 7000, 8000, 9000, 10,000, 12,000, 15,000, or 20,000 N/m and/or not more than 100,000, 95,000, 90,000, 85,000, 83,000, 80,000, 75,000, 70,000, 65,000, 60,000, 55,000, 50,000, 47,000, 45,000, or 40,000 N/m, measured according to NWSP 110.4 Option A.

The dry tensile strength in the machine direction, normalized according to the thickness of the nonwoven, may be at least 1000, 2000, 3000, 4000, 5000, 6000, 7000, 8000, 9000, 10,000, 12,000, 15,000, 20,000, 25,000, 30,000, 35,000, 40,000, 45,000, or 50,000 N/m and/or not more than 450,000, 417,000, 400,000, 350,000, 300,000, 283,000, 250,000, or 200,000 N/m, while the dry tensile strength in the cross direction normalized for thickness can be at least 3000, 4000, 5000, 6000, 7000, 8000, 9000, 10,000, 11,000, 12,000, 13,000, 14,000, or 15,000 N/m and/or not more than 400,000, 350,000, 300,000, 250,000, 200,000, 150,000, 100,000, 75,000, or 50,000 N/m, measured according to NWSP 100.4 Option A.

When normalized for the bulk density, the nonwoven web may have a wet tensile strength in the machine direction of at least 0.01, 0.05, 0.07, 0.10, 0.12, 0.15, 0.20, 0.25, 0.30, 0.35, 0.40, 0.45, 0.50, 0.54, or 0.55 Nm³/kg and/or not more than 2.0, 1.9, 1.8, 1.7, 1.6, 1.5, 1.4, 1.3, 1.2, 1.1, 1.0, 0.9, 0.8, 0.7, 0.6, 0.5, 0.4, or 0.3 Nm³/kg, measured according to NWSP 110.4 Option A. Additionally, the nonwoven web may have a wet tensile strength in the cross-direction, normalized for the bulk density of the nonwoven, of at least 0.01, 0.02, 0.05, 0.07, 0.10, 0.12, 0.15, 0.20, 0.25, 0.30, 0.35, 0.40, 0.45, 0.50, 0.54, or 0.55 Nm³/kg and/or not more than 2.0, 1.9, 1.8, 1.7, 1.6, 1.5, 1.4, 1.3, 1.2, 1.1, 1.0, 0.90, 0.80, 0.70, 0.60, 0.56, 0.50, 0.40, or 0.3 Nm³/kg, measured according to NWSP 110.4 Option A.

The dry tensile strength in the machine direction, normalized according to bulk density of the nonwoven, may be at least 0.01, 0.02, 0.05, 0.07, 0.10, 0.12, 0.15, 0.20, 0.25, 0.30, 0.35, 0.40, 0.45, 0.50, 0.55, or 0.60 Nm³/kg and/or not more than 5, 4.5, 4, 3.5, 3.4, 3, 2.5, 2, 1.5, 1, 0.5, or 0.3 Nm³/kg, while the dry tensile strength in the cross direction normalized for basis weight can be at least 0.01, 0.02, 0.05, 0.07, 0.10, 0.12, 0.15, 0.18, 0.20, 0.25, 0.30, 0.35, 0.40, 0.45, 0.50, 0.55, or 0.60 Nm³/kg and/or not more than 2.0, 1.9, 1.8, 1.7, 1.6, 1.5, 1.4, 1.3, 1.2, 1.1, 1.0, 0.90, 0.80, 0.70, 0.60, 0.56, 0.50, 0.40, or 0.3 Nm³/kg, measured according to NWSP 100.4 Option A.

In some cases, the wet bondability index (BI₂₀) of the nonwoven web can be at least 0.1, 0.2, 0.5, 1, 2, 2.5, 5, 6, 7, 8, 9, 10, 11, 12, or 13 and/or not more than 30, 29, 28, 27, 26, 25, 24, 23, 22, 21, 20, 19, 18, 17, 16, 15, 14, 13, 12, 11, 10, 9, 8, 7, 6, 5, or 4. The dry bondability index of the nonwoven can be at least 0.1, 0.5, 1, 2, 2.5, 3, 4, 5, 6, 7, 8, 9, 10, 12, 15, 17, or 20. Alternatively, or in addition, the dry bondability of the nonwoven can be no more than 50, 45, 40, 35, 30, 25, 20, 15, or 10. The bondability index of the nonwoven is defined as the square root of the product of the tensile strength in the machine direction and the tensile strength in the cross direction. The calculated bondability index is multiplied by 20 and divided by the actual base weight in g/m² to report bondability index in standard nonwovens base weight of 20g/m² (BI₂₀). The wet and dry tensile strengths are measured as described herein.

Additionally, or in the alternative, the nonwoven web may have an absorbency of at least 300 percent (3 grams of water per gram of fiber). In other embodiments, the nonwoven web may have an absorbency of at least 400, 450, 500, 550, 600, 650, 700, 750, 800, 850, 900, 950, 1000, 1050, 1100, or 1150 percent, or at least 4, 4.5, 5, 5.5, 6, 6.5, 7, 7.5, 8, 8.5, 9, 9.5, 10, 10.5, 11, or 11.5 grams of water per gram of fiber. In some embodiments, the nonwoven web may have an absorbency of not more than 2500, 2400, 2300, 2200, 2100, 2000, 1950, 1900, 1850, 1800, 1750, 1700, 1650, 1600, 1550, 1500, 1450, 1400, 1350, 1300, 1250, 1200, or 1150 percent, or not more than 25, 24, 23, 22, 21, 20, 19.5, 19, 18.5, 18, 17.5, 17, 16.5, 16, 15.5, 15, 14.5, 14, 13.5, 13, 12.5, 12, or 11.5 grams of water per gram of fiber. Absorbency values provided herein are measured as described in NWSP 010.1-7.2.

The nonwoven web may also exhibit desirable wicking properties. For example, in some embodiments, the nonwoven web may have a wicking height, measured in the cross or machine direction, at 5 minutes of not more than 200 mm. In some case, the wicking height of the nonwoven web can be no more than 200, 175, 150, 125, 100, 95, 90, 85, 80, 75, 70, 65, 60, 55, 50, 45, 40, 35, 30, 25, 20, 15, 10, or 5 mm, measured as described in NWSP 010.1-7.3. Additionally, or in the alternative, the wicking height can be at least 1, 5, 10, or 20 mm, measured as described in NWSP 010.1-7.3.

In some embodiments, the nonwoven web may have a wicking height, measured in the machine or cross direction, of at least 1, at least 2, at least 3, at least 5, at least 10, at least 12, at least 15, at least 20, at least 25, at least 30, at least 35, at least 40, at least 45, at least 50, or at least 55 mm, measured as described in NWSP 010.1-7.3. Alternatively, or in addition, the nonwoven web may have a wicking height, measured in the machine or cross direction, of not more than 70, not more than 65, not more than 60, not more than 55, not more than 50, not more than 45, not more than 40, not more than 35, not more than 30, not more than 25, not more than 20, not more than 15, not more than 12, not more than 10, not more than 8, not more than 5, not more than 3, or not more than 2 mm, measured as described in NWSP 010.1-7.3.

The nonwoven web may exhibit superior thermal insulation per equivalent unit loft. In one embodiment or in any of the mentioned embodiments, the nonwoven web can have a clo value per millimiter of loft of at least 0.180, or at least 0.185, or at least 0.190, or at least 0.195, or at least 0.2, or at least 0.205, or at least 0.21, or at least 0.215, or at least 0.22, or at least 0.225, or at least 0.23, or at least 0.235, or at least 0.24, or at least 0.245, or at least 0.250, in each case as clo/mm.

The nonwoven web may also exhibit desirable levels of softness and/or opacity. Softness is measured according to the Emtec Tissue Softness Analyzer (TSA) method as described in the Example Section below. In some embodiments, the hand-feel of the nonwoven web can be at least 104, 104.5, 105, 105.5, 106, 106.25, 106.5, 106.75, 107, 107.25, 107.5, 107.75, or 108, as determined by the TSA method using the QA1 algorithm. Additionally, or in the alternative, the real softness of the nonwoven web, measured according to the TSA method, can be at least 2, 2.05, 2.10, 2.15, 2.20, 2.25, 2.30, 2.35, 2.40, 2.45, 2.50, 2.55, 2.60, 2.65, 2.70, 2.75, 2.80, 2.85, 2.90, 2.95, 3, 3.05, 3.1, 3.15, 3.2, 3.25, 3.3, 3.35, or 3.4 dB and/or not more than 6, 5.75, 5.5, 5.25, 5.0, 4.75, 4.50, 4.45, 4.40, 4.35, 4.30, 4.25, 4.20, 4.15, 4.10, 4.05, 4.0, 3.95, 3.90, 3.85, 3.80, 3.75, 3.7, 3.65, 3.6, 3.55, 3.5, or 3.45 dB.

In some embodiments, the roughness of the nonwoven web can be at least 1, 2, 5, 8, 10, 12, 12.5, 13, 13.5, 14, 14.5, 15, 15.5, 16, 16.5, 17, 17.5, 18, 18.5, or 19 dB and/or not more than 30, 28, 25, 24, 22.5, 22, 21.5, 21, 20.5, 20, 19.5, 19, 18.5, 18, 17.5, 17, 16.5, 16, 15.5, 15, 14.5, or 14 dB. The web roughness measured according to the TSA method correlates to the vertical vibration of the tissue sample itself caused by the horizontal motion of the blade and the surface structure.

The opacity of a nonwoven web may be measured according to the procedure described in NWSP 060.1.R0. The nonwoven web according to the present invention may have an opacity of at least 40, 45, 50, 55, 60, 65, 70, 75, 80, 85, 90, 95, or up to 100 percent. Alternatively, or in addition, the nonwoven web may have an opacity of not more than 95, 90, 85, 80, 75, 70, 65, 60, or 55 percent, measured according to the above procedure.

The CA staple fibers and nonwovens formed therefrom can be biodegradable, meaning that such fibers are expected to decompose under certain environmental conditions. The degree of degradation can be characterized by the weight loss of a sample over a given period of exposure to certain environmental conditions. In some cases, the material used to form the staple fibers, the nonwoven webs, or articles produced from the fibers can exhibit a weight loss of at least 5, 10, 15, or 20 percent after burial in soil for 60 days and/or a weight loss of at least 15, 20, 25, 30, or 35 percent after 15 days of exposure to a typical municipal composter. However, the rate of degradation may vary depending on the particular end use of the fibers, as well as the composition of the remaining article, and the specific test. Exemplary test conditions are provided in U.S. Patent Nos. 5,970,988 and 6,571,802.

In some embodiments, the CA fibers may be biodegradable and such fibers may be used to form nonwoven webs. Unexpectedly, it has been found that the CA fibers can exhibit enhanced levels of environmental non-persistence, characterized by better-than-expected degradation under various environmental conditions. The fibers and fibrous articles described herein may meet or exceed passing standards set by international test methods and authorities for industrial compostability, home compostability, and/or soil biodegradability.

To be considered "compostable," a material must meet the following four criteria: (1) the material must be biodegradable; (2) the material must be disintegrable; (3) the material must not contain more than a maximum amount of heavy metals; and (4) the material must not be ecotoxic. As used herein, the term "biodegradable" generally refers to the tendency of a material to chemically decompose under certain environmental conditions. Biodegradability is an intrinsic property of the material itself, and the material can exhibit different degrees of biodegradability, depending on the specific conditions to which it is exposed. The term "disintegrable" refers to the tendency of a material to physically decompose into smaller fragments when exposed to certain conditions. Disintegration depends both on the material itself, as well as the physical size and configuration of the article being tested. Ecotoxicity measures the impact of the material on plant life, and the heavy metal content of the material is determined according to the procedures laid out in the standard test method.

The CA fibers can exhibit a biodegradation of at least 70 percent in a period of not more than 50 days, when tested under aerobic composting conditions at ambient temperature (28°C ± 2°C) according to ISO 14855-1 (2012). In some cases, the CA fibers can exhibit a biodegradation of at least 70 percent in a period of not more than 49, 48, 47, 46, 45, 44, 43, 42, 41, 40, 39, 38, or 37 days when tested under these conditions, also called "home composting conditions." These conditions may not be aqueous or anaerobic. In some cases, the CA fibers can exhibit a total biodegradation of at least 71, 72, 73, 74, 75, 76, 77, 78, 79, 80, 81, 82, 83, 84, 85, 86, 87, or 88 percent, when tested under according to ISO 14855-1 (2012) for a period of 50 days under home composting conditions. This may represent a relative biodegradation of at least 95, 97, 99, 100, 101, 102, or 103 percent, when compared to cellulose subjected to identical test conditions.

To be considered "biodegradable," under home composting conditions according to the French norm NF T 51-800 and the Australian standard AS 5810, a material must exhibit a biodegradation of at least 90 percent in total (e.g., as compared to the initial sample), or a biodegradation of at least 90 percent of the maximum degradation of a suitable reference material after a plateau has been reached for both the reference and test item. The maximum test duration for biodegradation under home compositing conditions is 1 year. The CA fibers may exhibit a biodegradation of at least 90 percent within not more than 1 year, measured according 14855-1 (2012) under home composting conditions. In some cases, the CA fibers may exhibit a biodegradation of at least 91, 92, 93, 94, 95, 96, 97, 98, 99, or 99.5 percent within not more than 1 year, or the fibers may exhibit 100 percent biodegradation within not more than 1 year, measured according 14855-1 (2012) under home composting conditions.

Additionally, or in the alternative, the CA fibers may exhibit a biodegradation of at least 90 percent within not more than 350, 325, 300, 275, 250, 225, 220, 210, 200, 190, 180, 170, 160, 150, 140, 130, 120, 110, 100, 90, 80, 70, 60, or 50 days, measured according 14855-1 (2012) under home composting conditions. In some cases, the fibers can be at least 97, 98, 99, or 99.5 percent biodegradable within not more than 70, 65, 60, or 50 days of testing according to ISO 14855-1 (2012) under home composting conditions. As a result, the CA fibers may be considered biodegradable according to, for example, French Standard NF T 51-800 and Australian Standard AS 5810 when tested under home composting conditions.

The CA fibers can exhibit a biodegradation of at least 60 percent in a period of not more than 45 days, when tested under aerobic composting conditions at a temperature of 58°C (± 2°C) according to ISO 14855-1 (2012). In some cases, the fibers can exhibit a biodegradation of at least 60 percent in a period of not more than 44, 43, 42, 41, 40, 39, 38, 37, 36, 35, 34, 33, 32, 31, 30, 29, 28, or 27 days when tested under these conditions, also called "industrial composting conditions." These may not be aqueous or anaerobic conditions. In some cases, the fibers can exhibit a total biodegradation of at least 65, 70, 75, 80, 85, 87, 88, 89, 90, 91, 92, 93, 94, or 95 percent, when tested under according to ISO 14855-1 (2012) for a period of 45 days under industrial composting conditions. This may represent a relative biodegradation of at least 95, 97, 99, 100, 102, 105, 107, 110, 112, 115, 117, or 119 percent, when compared to cellulose fibers subjected to identical test conditions.

To be considered "biodegradable," under industrial composting conditions according to ASTM D6400 and ISO 17088, at least 90 percent of the organic carbon in the whole item (or for each constituent present in an amount of more than 1% by dry mass) must be converted to carbon dioxide by the end of the test period when compared to the control or in absolute. According to European standard ED 13432 (2000), a material must exhibit a biodegradation of at least 90 percent in total, or a biodegradation of at least 90 percent of the maximum degradation of a suitable reference material after a plateau has been reached for both the reference and test item. The maximum test duration for biodegradability under industrial compositing conditions is 180 days. The CA fibers described herein may exhibit a biodegradation of at least 90 percent within not more than 180 days, measured according 14855-1 (2012) under industrial composting conditions. In some cases, the CA fibers may exhibit a biodegradation of at least 91, 92, 93, 94, 95, 96, 97, 98, 99, or 99.5 percent within not more than 180 days, or the fibers may exhibit 100 percent biodegradation within not more than 180 days, measured according 14855-1 (2012) under industrial composting conditions.

Additionally, or in the alternative, the CA fibers may exhibit a biodegradation of least 90 percent within not more than 175, 170, 165, 160, 155, 150, 145, 140, 135, 130, 125, 120, 115, 110, 105, 100, 95, 90, 85, 80, 75, 70, 65, 60, 55, 50, or 45 days, measured according 14855-1 (2012) under industrial composting conditions. In some cases, the CA fibers can be at least 97, 98, 99, or 99.5 percent biodegradable within not more than 65, 60, 55, 50, or 45 days of testing according to ISO 14855-1 (2012) under industrial composting conditions. As a result, the CA fibers may be considered biodegradable according ASTM D6400 and ISO 17088 when tested under industrial composting conditions.

The fibers or fibrous articles may exhibit a biodegradation in soil of at least 60 percent within not more than 130 days, measured according to ISO 17556 (2012) under aerobic conditions at ambient temperature. In some cases, the fibers can exhibit a biodegradation of at least 60 percent in a period of not more than 130, 120, 110, 100, 90, 80, or 75 days when tested under these conditions, also called "soil composting conditions." These may not be aqueous or anaerobic conditions. In some cases, the fibers can exhibit a total biodegradation of at least 65, 70, 72, 75, 77, 80, 82, or 85 percent, when tested under according to ISO 17556 (2012) for a period of 195 days under soil composting conditions. This may represent a relative biodegradation of at least 70, 75, 80, 85, 90, or 95 percent, when compared to cellulose fibers subjected to identical test conditions.

In order to be considered "biodegradable," under soil composting conditions according the OK biodegradable SOIL conformity mark of Vingotte and the DIN Geprüft Biodegradable in soil certification scheme of DIN CERTCO, a material must exhibit a biodegradation of at least 90 percent in total (e.g., as compared to the initial sample), or a biodegradation of at least 90 percent of the maximum degradation of a suitable reference material after a plateau has been reached for both the reference and test item. The maximum test duration for biodegradability under soil compositing conditions is 2 years. The CA fibers may exhibit a biodegradation of at least 90 percent within not more than 2 years, 1.75 years, 1 year, 9 months, or 6 months measured according ISO 17556 (2012) under soil composting conditions. In some cases, the CA fibers may exhibit a biodegradation of at least 91, 92, 93, 94, 95, 96, 97, 98, 99, or 99.5 percent within not more than 2 years, or the fibers may exhibit 100 percent biodegradation within not more than 2 years, measured according ISO 17556 (2012) under soil composting conditions.

Additionally, or in the alternative, the CA fibers may exhibit a biodegradation of at least 90 percent within not more than 700, 650, 600, 550, 500, 450, 400, 350, 300, 275, 250, 240, 230, 220, 210, 200, or 195 days, measured according 17556 (2012) under soil composting conditions. In some cases, the CA fibers can be at least 97, 98, 99, or 99.5 percent biodegradable within not more than 225, 220, 215, 210, 205, 200, or 195 days of testing according to ISO 17556 (2012) under soil composting conditions. As a result, the CA fibers may meet the requirements to receive the OK biodegradable SOIL conformity mark of Vingotte and to meet the standards of the DIN Geprüft Biodegradable in soil certification scheme of DIN CERTCO.

In some embodiments, the CA fibers (or fibrous articles) of the present invention may include less than 1, 0.75, 0.50, or 0.25 weight percent of components of unknown biodegradability. In some cases, the fibers or fibrous articles described herein may include no components of unknown biodegradability.

In addition to being biodegradable under industrial and/or home composting conditions, the CA fibers or fibrous articles as described herein may also be compostable under home and/or industrial conditions. As described previously, a material is considered compostable if it meets or exceeds the requirements set forth in EN 13432 for biodegradability, ability to disintegrate, heavy metal content, and ecotoxicity. The CA fibers or fibrous articles may exhibit sufficient compostability under home and/or industrial composting conditions to meet the requirements to receive the OK compost and OK compost HOME conformity marks from Vingotte.

In some cases, the CA fibers and fibrous articles may have a volatile solids concentration, heavy metals and fluorine content that fulfill all of the requirements laid out by EN 13432 (2000). Additionally, the CA fibers may not cause a negative effect on compost quality (including chemical parameters and ecotoxicity tests).

In some cases, the CA fibers or fibrous articles can exhibit a disintegration of at least 90 percent within not more than 26 weeks, measured according to ISO 16929 (2013) under industrial composting conditions. In some cases, the fibers or fibrous articles may exhibit a disintegration of at least 91, 92, 93, 94, 95, 96, 97, 98, 99, or 99.5 percent under industrial composting conditions within not more than 26 weeks, or the fibers or articles may be 100 percent disintegrated under industrial composting conditions within not more than 26 weeks. Alternatively, or in addition, the fibers or articles may exhibit a disintegration of at least 90 percent under industrial compositing conditions within not more than 26, 25, 24, 23, 22, 21, 20, 19, 18, 17, 16, 15, 14, 13, 12, 11, or 10 weeks, measured according to ISO 16929 (2013). In some cases, the CA fibers or fibrous articles may be at least 97, 98, 99, or 99.5 percent disintegrated within not more than 12, 11, 10, 9, or 8 weeks under industrial composting conditions, measured according to ISO 16929 (2013).

In some cases, the CA fibers or fibrous articles can exhibit a disintegration of at least 90 percent within not more than 26 weeks, measured according to ISO 16929 (2013) under home composting conditions. In some cases, the fibers or fibrous articles may exhibit a disintegration of at least 91, 92, 93, 94, 95, 96, 97, 98, 99, or 99.5 percent under home composting conditions within not more than 26 weeks, or the fibers or articles may be 100 percent disintegrated under home composting conditions within not more than 26 weeks. Alternatively, or in addition, the fibers or articles may exhibit a disintegration of at least 90 percent within not more than 26, 25, 24, 23, 22, 21, 20, 19, 18, 17, 16, or 15 weeks under home composting conditions, measured according to ISO 16929 (2013). In some cases, the CA fibers or fibrous articles may be at least 97, 98, 99, or 99.5 percent disintegrated within not more than 20, 19, 18, 17, 16, 15, 14, 13, or 12 weeks, measured under home composting conditions according to ISO 16929 (2013).

The thermally-bonded, nonwoven web according to the invention is particularly suited for use as a heat-insulating interliner or layer in textile-type applications, such as in garment, bedding, and other household goods. In such applications, the heat-insulating interliner may be used by itself or in combination with other insulating materials, such as down, feather, polyester fibers, polyester microfibers, or mixtures thereof. Examples of articles of manufacturer that can include the heat-insulating interliner include outerwear, shoes, gloves, pillows, comforters, blankets, throws, mattresses, mattress pads, sleeping bags, cushions, and the like.

In some cases, the thermally-bonded nonwoven web of the invention can have superior heat-insulating properties for its weight. For example, the web can have a clo per gsm (or clo/(g/m2)) value of at least 0.030, at least 0.031, at least 0.032, at least 0.033, or at least 0.034 g/m2.

It is contemplated that any ingredient, component, or step that is not specifically named or identified as part of the present invention may be explicitly excluded.

Any process/method, apparatus, compound, composition, embodiment, or component of the present invention may be modified by the transitional terms "comprising," "consisting essentially of," or "consisting of," or variations of those terms.

As used herein, the indefinite articles "a" and "an" mean one or more, unless the context clearly suggests otherwise. Similarly, the singular form of nouns includes their plural form, and vice versa, unless the context clearly suggests otherwise.

This invention can be further illustrated by the following working examples.

### EXAMPLES

### Examples 1-25

### Preparation of Thermally-Bonded, Nonwoven Battings

The fibers listed in Table 1 below were hand mixed and run through a 12-inch carding machine three times to ensure a uniform web. After the third pass, the battings were placed in a static oven to cure the low-melt binder fibers. The target weight for each batting was 100 g/m2.

The 1.8 dpf CA fibers (round, Y, and C/hollow) all had a cut length of 38 mm, while the 3.0 dpf CA fibers were cut to 51 mm. All fibers were crimped (>10 cpi).

Both the 1.5 and the 15 dpf PET fibers had a cut length of 64 mm (2.5 inches) and were conjugated. The PET fibers were non-siliconized (i.e., no silicone coating).

All binder fibers had a cut length of 51 mm (2 inches), except for Examples 12, 23, 24, and 25, which had a cut length of 6.4 mm (0.25 inches). All binder fibers had a dpf of 4, except for Example 9, which had a dpf of 2.

For all examples except 12, 23, 24, and 25, the cure conditions were 10 minutes at 116°C. For Examples 12, 23, 24, and 25, the cure conditions were 10 minutes at 135°C. For Example 11, the top roll temperature was 135°C, the bottom roll temperature was 128°C, and the machine was operated at a rate of 1 foot per minute.

**Table 1**

| **Example No.** | **Cellulose Acetate Base Fiber(s) (wt%, dpf, cross-sectional shape)** | **1.5 DPF PET Fiber (wt%)** | **15 DPF Conjugated PET Fiber (wt%)** | **Binder Fiber (wt%)** |
|---|---|---|---|---|
| 1 | 80% 3.0 Round | - | - | 20% PET/coPET |
| 2 | 80% 1.8 Round | - | - | 20% PET/coPET |
| 3 | 80% 1.8 Tri-lobal | - | - | 20% PET/coPET |
| 4 | 80% 1.8 Hollow | - | - | 20% PET/coPET |
| 5 | 40% 3.0 Round + 40% 1.8 Round | - | - | 20% PET/coPET |
| 6 | 40% 3.0 Round + 40% 1.8 Tri-lobal | - | - | 20% PET/coPET |
| 7 | 40% 3.0 Round + 40% 1.8 Hollow | - | - | 20% PET/coPET |
| 8 | 70% 1.8 Tri-lobal | - | - | 30% PET/coPET |
| 9 | 80% 1.8 Tri-lobal | - | - | 20% PET/coPET (2 dpf) |
| 10^{a} | 80% 1.8 Tri-lobal | - | - | 20% PET/coPET |
| 11^{b} | 80% 1.8 Tri-lobal | - | - | 20% PET/coPET |
| 12 | 80% 1.8 Tri-lobal | - | - | 20% PET/PE (0.25 in.) |
| 13 | 40% 3.0 Round | - | 40% | 20% PET/coPET |
| 14 | 40% 1.8 Round | - | 40% | 20% PET/coPET |
| 15 | 40% 1.8 Tri-lobal | - | 40% | 20% PET/coPET |
| 16 | 40% 1.8 Hollow | - | 40% | 20% PET/coPET |
| 17 | 20% 3.0 Round + 20% 1.8 Round | - | 40% | 20% PET/coPET |
| 18 | 20% 3.0 Round + 20% 1.8 Tri-lobal | - | 40% | 20% PET/coPET |
| 19 | 20% 3.0 Round + 20% 1.8 Hollow | - | 40% | 20% PET/coPET |
| 20 | - | 80% | - | 20% PET/coPET |
| 21 | - | 60% | 20% | 20% PET/coPET |
| 22 | - | 40% | 40% | 20% PET/coPET |
| 23 | 40% 3.0 Round | - | 40% | 20% PET/PE (0.25 in.) |
| 24 | 40% 1.8 Hollow | - | 40% | 20% PET/PE (0.25 in.) |
| 25 | 20% 3.0 Round + 20% 1.8 Hollow | - | 40% | 20% PET/PE (0.25 in.) |

| | | | | |
|---|---|---|---|---|
| ^{a} Needle-punched. ^{b} Calendered with a 3-mm gap between the rolls. | | | | |

All samples carded well except for the 1.8 tri-lobal fiber. There was a lot of fly and the fiber wanted to stick to the doffing cylinder and comb. Because of the fly and sticking, the 80% 1.8 tri-lobal battings had a weight of approximately 88 gsm, while approximately 97 gsm battings were achieved with the other fibers.

The 1.8 hollow fiber seemed to card the best.

The battings from Examples 12 and 23-25, which contained the PET/PE binder fiber, had the most structural integrity while still maintaining their softness. The only problem was that this binder fiber was too short for this application, so a lot of it fell out in the card.

Examples 13-19 and 21-24 contained 15 dpf conjugated PET fibers for structure. These battings were springy and resistant to compression because of the presence of the structural fiber. Upon being compressed and then released, they recovered their loft.

Examples 20-22 were prepared as controls.

### Thermal Resistance Testing

The samples were tested in accordance with ASTM D1518-14 with Option 2 air velocity condition with forced air flowing over the plate. The air temperature flowing over the plate was 15°C. The relative humidity was controlled to 65%. The air velocity was 1.0 m/second. The average total thermal resistance was measured and used to calculate intrinsic Clo.

The battings from Examples 1-7 were subjected to thermal resistance testing to measure their thermal insulating properties. The results are reported in Table 2 below.

**Table 2**

| **Example No.** | **CE Fiber(s)** | **Instrinsic Clo Value (clo)** | **Batting Weight (g/m²)** | **Clo / (g/m²)** |
|---|---|---|---|---|
| 1 | 80% 3.0 Round | 2.432 | 102.6 | 0.0237 |
| 2 | 80% 1.8 Round | 2.428 | 98.4 | 0.0247 |
| 3 | 80% 1.8 Tri-lobal | 2.494 | 71.7 | 0.0348 |
| 4 | 80% 1.8 Hollow | 2.494 | 102.9 | 0.0242 |
| 5 | 40% 3.0 Round + 40% 1.8 Round | 2.441 | 107.1 | 0.0228 |
| 6 | 40% 3.0 Round + 40% 1.8 Tri-lobal | 2.370 | 94.5 | 0.0251 |
| 7 | 40% 3.0 Round + 40% 1.8 Hollow | 2.339 | 102.6 | 0.0228 |
| 8 | 40% 3.0 Round | 2.1380 | 80.2 | 0.0266 |
| 9 | 40% 1.8 Round | 2.3261 | 93.8 | 0.0248 |
| 10 | 40% 1.8 Tri-lobal | 2.7258 | 118.7 | 0.0230 |
| 11 | 40% 1.8 Hollow | 2.6434 | 113.3 | 0.0233 |
| 12 | 20% 3.0 Round + 20% 1.8 Round | 2.6834 | 117.1 | 0.0229 |
| 13 | 20% 3.0 Round + 20% 1.8 Tri-lobal | 2.7004 | 120.4 | 0.0224 |
| 14 | 20% 3.0 Round + 20% 1.8 Hollow | 2.6387 | 119.3 | 0.0221 |
| 15 | - | 2.6866 | 70.5 | 0.0381 |
| 16 | - | 2.7114 | 97.0 | 0.0280 |
| 17 | 40% 3.0 Round | 2.3039 | 97 | 0.0237 |
| 18 | 40% 1.8 Hollow | 2.4336 | 100.3 | 0.0243 |
| 19 | 20% 3.0 Round + 20% 1.8 Hollow | 2.2648 | 109.0 | 0.0208 |

As seen from Table 2, the clo-per-gsm values for Examples 3 and 6, which contained the 1.8 tri-lobal or Y-shaped CA fibers, were higher than the others containing CA fibers, with the value for Example 3 being significantly higher, but none as high as of a comparative Example 20 containing 80 wt.% of fine 1.5 PET denier. However, when considering the thermal performance of an insulation batting as a function of its thickness, or loft, many of the battings containing CA fiber exhibited superior thermal insulation per unit loft. Intrinsic clo per millimeter data for each batting was calculated and is provided in Table 3. In many cases, clo values improve as loft increases. If two battings possess the same loft, but one offers a higher clo value, the batting with the higher clo value will be more desirable. This batting can offer higher thermal resistance without any additional bulkiness. If two battings possess the same clo value, but one has a lower loft, the batting with lower loft might be more desirable. This batting can offer less bulk while providing equivalent thermal resistance.

**Table 3: Intrinsic Clo Per Unit Loft Calculations.**

| | | **Loft (mm)** | | | | | | | |
|---|---|---|---|---|---|---|---|---|---|
| **Sample ID** | **Fibers Used** | **Rep. 1** | **Rep. 2** | **Rep. 3** | **Rep. 4** | **Rep. 5** | **Mean** | ***I_{f}* (clo)** | **clo/mm** |
| 1 | 80% 3.0R | 9.32 | 8.54 | 9.42 | 9.90 | 10.20 | 9.47 | 2.4317 | **0.257** |
| 2 | 80% 1.8R | 9.78 | 10.20 | 9.96 | 9.52 | 9.74 | 9.84 | 2.4284 | **0.247** |
| 3 | 80% 1.8Y | 11.48 | 13.34 | 15.78 | 14.24 | 11.88 | 13.34 | 2.4938 | **0.187** |
| 4 | 80% 1.8D | 14.50 | 14.84 | 13.98 | 15.00 | 14.96 | 14.65 | 2.4940 | **0.170** |
| 5 | 40% 3.0R + 40% 1.8R | 10.40 | 10.22 | 9.76 | 9.68 | 9.92 | 9.99 | 2.4409 | **0.244** |
| 6 | 40% 3.0R + 40% 1.8Y | 12.48 | 13.76 | 13.38 | 13.30 | 12.90 | 13.16 | 2.3704 | **0.180** |
| 7 | 40% 3.0R + 40% 1.8D | 9.74 | 9.60 | 9.30 | 9.02 | 9.84 | 9.50 | 2.3386 | **0.246** |
| 8 | 40% 3.0R | 14.12 | 15.00 | 14.62 | 14.30 | 13.42 | 14.29 | 2.1380 | **0.150** |
| 9 | 40% 1.8R | 16.72 | 16.86 | 17.02 | 17.22 | 16.74 | 16.91 | 2.3261 | **0.138** |
| 10 | 40% 1.8Y | 19.10 | 16.32 | 17.32 | 14.64 | 16.30 | 16.73 | 2.7258 | **0.163** |
| 11 | 40% 1.8D | 16.44 | 15.06 | 15.74 | 16.28 | 16.20 | 15.94 | 2.6434 | **0.166** |
| 12 | 20% 3.0R + 20% 1.8R | 16.26 | 15.98 | 16.82 | 16.32 | 17.06 | 16.48 | 2.6834 | **0.163** |
| 13 | 20% 3.0R + 20% 1.8Y | 17.68 | 17.10 | 17.42 | 16.22 | 17.88 | 17.26 | 2.7004 | **0.156** |
| 14 | 20% 3.0R + 20% 1.8D | 16.24 | 14.88 | 16.04 | 16.06 | 17.12 | 16.06 | 2.6387 | **0.164** |
| 15 | 80% 1.5D PET | 20.22 | 17.56 | 17.00 | 15.72 | 15.82 | 17.26 | 2.6866 | **0.156** |
| 16 | 40% 1.5D PET | 20.58 | 19.72 | 19.48 | 19.68 | 20.02 | 19.89 | 2.7144 | **0.136** |
| 17 | 40% 3.0R | 16.80 | 17.32 | 17.30 | 17.18 | 17.86 | 17.29 | 2.3039 | **0.133** |
| 18 | 40% 1.8D | 21.06 | 21.68 | 20.34 | 20.66 | 22.96 | 21.34 | 2.4336 | **0.114** |
| 19 | 20% 3.0R + 20% 1.8D | 20.78 | 21.74 | 20.18 | 21.60 | 24.92 | 21.84 | 2.2648 | **0.104** |

For battings consisting of 80% CA fiber and 20% PET/coPET binder fiber, the average clo/mm varied between 0.170 and 0.257 with an average clo/mm of 0.219. In terms of clo/mm, the seven battings in this group were the highest performing of the data set with all seven surpassing the polyester control numbers 15 and 16 (0.156 and 0.136). The battings constructed with 40% CA fiber, 40% 15 denier conjugated polyester fiber and 20% PET/coPET binder fiber had clo/mm values of 0.138-0.166 with an average of 0.157 clo/mm. These battings performed similarly to the polyester controls. The battings made of 40% CA fiber, 40% 15 denier conjugated polyester fiber and 20% PET/HDPE binder fiber were the poorest performers, with an average clo/mm of 0.117. Battings containing large amounts of cellulose acetate fiber can provide greater thermal resistance at lower lofts than 100% polyester battings.

The invention has been described in detail with particular reference to specific embodiments thereof, but it will be understood that variations and modifications can be made within the scope of the invention.

## Claims

1. A fiber blend comprising:
(a) a staple fiber formed from cellulose acetate; and
(b) a binder fiber,
wherein the staple fiber has a crimp frequency of 10 to 30 crimps per inch (CPI) measured according to ASTM D3937, a cut length of 55 mm or less, and a non-round cross-sectional shape;
wherein the amount of cellulose acetate staple fiber is at least 40 wt.% relative to the weight of all fibers in the blend;
wherein the amount of the binder fiber is in the range from 10 to 30 wt% of the blend;
wherein the staple fiber has a denier per filament of less than 2.0.

2. The blend of claim 1, wherein the amount of cellulose acetate staple fiber is at least 60 wt.% relative to the weight of all fibers in the blend.

3. The blend of claim 1, wherein the staple fiber has a Y-shaped or tri-lobal cross-section.

4. The blend of claim 1, wherein the staple fiber has a crimp frequency of 15 to 25 CPI.

5. The blend of claim 1, wherein the staple fiber has a cut length of 10 to 55 mm.

6. The blend of claim 1, which further comprises (c) a natural fiber selected from wool, cotton, flax, and hemp.

7. The blend of claim 1, which further comprises (d) a synthetic fiber selected from polyesters, polyamides, and polyolefins.

8. The blend of claim 1, which comprises two or more types of staple fibers formed from cellulose acetate.

9. The blend of claim 1, wherein the binder fiber is a bicomponent fiber comprising a polyester and a copolyester.

10. The blend of claim 1, wherein the binder fiber is a bicomponent fiber comprising a polyester and a polyolefin.

11. A thermally-bonded, nonwoven web comprising the blend of claim 1.

12. A nonwoven web comprising the blend of claim 1 and having a clo/mm value of at least 0.180.

13. The nonwoven web of claim 13, having a clo/mm value of at least 0.210.

14. The nonwoven web of claim 11, wherein the nonwoven web is air-laid.

15. The nonwoven web of claim 14, wherein the cellulose acetate staple fibers are lapped horizontally relative to the web's thickness.

16. The nonwoven web of claim 14, which comprises a plurality of vertical parallel pleats relative to the web's thickness.

17. A heat-insulating interliner comprising the nonwoven web of claim 13.

18. The interliner of claim 17, which further comprises down, feather, polyester fiber, polyester microfiber, or mixtures thereof.

19. An article of manufacture comprising the interliner of claim 17, wherein the article comprises a garment, a shoe, a glove, a pillow, a comforter, a blanket, a throw, a mattress, a mattress pad, a sleeping bag, or a cushion.

## Patentansprüche

1. Fasermischung, umfassend:
(a) eine aus Celluloseacetat gebildete Stapelfaser und
(b) eine Bindemittelfaser,
wobei die Stapelfaser eine Kräuselhäufigkeit von 10 bis 30 Kräuselungen pro Inch (CPI), gemessen gemäß ASTM D3937, eine Schnittlänge von 55 mm oder weniger und eine nicht runde Querschnittsform aufweist;
wobei die Menge an Celluloseacetat-Stapelfaser mindestens 40 Gew.-% in Bezug auf das Gewicht aller Fasern in der Mischung beträgt;
wobei die Menge an der Bindemittelfaser im Bereich von 10 bis 30 Gew.-% der Mischung liegt;
wobei die Stapelfaser ein Denier pro Faden von weniger als 2,0 aufweist.

2. Mischung nach Anspruch 1, wobei die Menge an Celluloseacetat-Stapelfaser mindestens 60 Gew.-% in Bezug auf das Gewicht aller Fasern in der Mischung beträgt.

3. Mischung nach Anspruch 1, wobei die Stapelfaser einen Y-förmigen oder Kleeblattquerschnitt aufweist.

4. Mischung nach Anspruch 1, wobei die Stapelfaser eine Kräuselhäufigkeit von 15 bis 25 CPI aufweist.

5. Mischung nach Anspruch 1, wobei die Stapelfaser eine Schnittlänge von 10 bis 55 mm aufweist.

6. Mischung nach Anspruch 1, die ferner (c) eine natürliche Faser, ausgewählt aus Wolle, Baumwolle, Flachs und Hanf, umfasst.

7. Mischung nach Anspruch 1, die ferner (d) eine synthetische Faser, ausgewählt aus Polyestern, Polyamiden und Polyolefinen, umfasst.

8. Mischung nach Anspruch 1, die zwei oder mehr Arten von aus Celluloseacetat gebildeten Stapelfasern umfasst.

9. Mischung nach Anspruch 1, wobei die Bindemittelfaser eine Zweikomponentenfaser ist, die einen Polyester und einen Copolyester umfasst.

10. Mischung nach Anspruch 1, wobei die Bindemittelfaser eine Zweikomponentenfaser ist, die einen Polyester und ein Polyolefin umfasst.

11. Thermisch gebundenes Vliesgewebe, umfassend die Mischung nach Anspruch 1.

12. Vliesgewebe, das die Mischung nach Anspruch 1 umfasst und einen clo/mm-Wert von mindestens 0,180 aufweist.

13. Vliesgewebe nach Anspruch 13 mit einem clo/mm-Wert von mindestens 0,210.

14. Vliesgewebe nach Anspruch 11, wobei das Vliesgewebe aus Airlaid-Material ist.

15. Vliesgewebe nach Anspruch 14, wobei die Celluloseacetat-Stapelfasern in Bezug auf die Dicke des Gewebes horizontal gewickelt sind.

16. Vliesgewebe nach Anspruch 14, das mehrere vertikale parallele Falten in Bezug auf die Dicke des Gewebes umfasst.

17. Wärmeisolierender Einlagestoff, umfassend das Vliesgewebe nach Anspruch 13.

18. Einlagestoff nach Anspruch 17, der ferner Daunen, Federn, Polyesterfasern, Polyestermikrofasern oder Gemische davon umfasst.

19. Fertigungsgegenstand, umfassend den Einlagestoff nach Anspruch 17, wobei der Gegenstand ein Kleidungsstück, einen Schuh, einen Handschuh, ein Kissen, eine Decke, einen Überwurf, einen Schal, eine Matratze, eine Matratzenauflage, einen Schlafsack oder ein Polster umfasst.

## Revendications

1. Mélange de fibres comprenant
(a) une fibre discontinue formée à partir d'acétate de cellulose ; et
(b) une fibre liante,
dans lequel la fibre discontinue a une fréquence de sertissage de 10 à 30 sertissages par pouce (CPI) mesurée selon la norme ASTM D3937, une longueur de coupe de 55 mm ou moins et une forme de section transversale non ronde ;
dans lequel la quantité de fibres discontinues d'acétate de cellulose est d'au moins 40 % en poids par rapport au poids de toutes les fibres du mélange ;
dans lequel la quantité de fibre liante est comprise entre 10 et 30 % en poids du mélange ;
dans lequel la fibre discontinue a un denier par filament inférieur à 2,0.

2. Mélange de la revendication 1, dans lequel la quantité de fibres discontinues d'acétate de cellulose est d'au moins 60 % en poids par rapport au poids de toutes les fibres du mélange.

3. Mélange de la revendication 1, dans lequel la fibre discontinue a une section transversale en forme de Y ou tri-lobale.

4. Mélange de la revendication 1, dans lequel la fibre discontinue a une fréquence de sertissage de 15 à 25 CPI.

5. Mélange de la revendication 1, dans lequel la fibre discontinue a une longueur de coupe de 10 à 55 mm.

6. Mélange de la revendication 1, qui comprend en outre (c) une fibre naturelle choisie parmi la laine, le coton, le lin et le chanvre.

7. Mélange de la revendication 1, qui comprend en outre (d) une fibre synthétique choisie parmi les polyesters, les polyamides et les polyoléfines.

8. Mélange de la revendication 1, qui comprend deux ou plusieurs types de fibres discontinues formées d'acétate de cellulose.

9. Mélange de la revendication 1, dans lequel la fibre liante est une fibre bicomposante comprenant un polyester et un copolyester.

10. Mélange de la revendication 1, dans lequel la fibre liante est une fibre bicomposante comprenant un polyester et une polyoléfine.

11. Bande non tissée liée thermiquement comprenant le mélange de la revendication 1.

12. Bande non tissée comprenant le mélange de la revendication 1 et ayant une valeur clo/mm d'au moins 0,180.

13. Bande non tissée de la revendication 13, ayant une valeur clo/mm d'au moins 0,210.

14. Bande non tissée de la revendication 11, dans laquelle la bande non tissée est tissée à l'air.

15. Bande non tissée de la revendication 14, dans laquelle les fibres discontinues d'acétate de cellulose sont superposées horizontalement par rapport à l'épaisseur de la bande.

16. Bande non tissée de la revendication 14, qui comprend une pluralité de plis parallèles verticaux par rapport à l'épaisseur de la bande.

17. Couche intercalaire thermo-isolante comprenant la bande non tissée de la revendication 13.

18. Couche intercalaire de la revendication 17, qui comprend en outre du duvet, des plumes, des fibres de polyester, des microfibres de polyester ou des mélanges de ceux-ci.

19. Article de fabrication comprenant la couche intercalaire de la revendication 17, dans lequel l'article comprend un vêtement, une chaussure, un gant, un oreiller, une doudoune, une couverture, un jeté de lit, un matelas, une alèse, un sac de couchage ou un coussin.
